# EUROPÄISCHE PATENTSCHRIFT

(11) **EP 2 272 615 B1**
(45) Veröffentlichungstag und Bekanntmachung des Hinweises auf die Patenterteilung: **31.08.2016**
(21) Anmeldenummer: 09165228.9
(22) Anmeldetag: 10.07.2009
(51) Int. Cl.: B23K 9/09, B23K 9/073, B23K 9/067

(54) **Konditionierung einer abschmelzenden Elektrode für das Lichtbogenschweissen oder Lichtbogenlöten unter Schutzgas**
Conditioning for a melting electrode for arc welding or soldering using a protective gas
Conditionnement d'une électrode fusible pour le soudage à l'arc ou la brasure à l'arc sous gaz protecteur

(43) Veröffentlichungstag der Anmeldung: 12.01.2011
(73) Patentinhaber: EWM AG, 56271 Mündersbach (DE)
(72) Erfinder: Huismann, Gerd, 22045 Hamburg (DE); Knopp, Norbert, 56337 Eitelborn (DE); Hübner, Marc, 56244 Steinen (DE); Goecke, Sven-Frithjof, 56244 Steinen (DE)
(74) Vertreter: Cohausz & Florack

(56) Entgegenhaltungen:
- WO-A1-2005/042199
- WO-A1-2008/028209
- DE-A1- 19 808 383
- DE-A1-102008 017 172

## Beschreibung

Die vorliegende Erfindung betrifft ein Verfahren zur Konditionierung einer abschmelzenden Elektrode eines Lichtbogenschweiß- oder Lichtbogenlötgeräts zum Schweißen oder Löten unter Schutzgas gemäß Anspruch 13 bzw. Anspruch 15, sowie eine Lichtbogenstromsteuereinheit für ein Lichtbogenschweiß- oder Lichtbogenlötgerät mit einer abschmelzenden Elektrode zum Schweißen oder Löten unter Schutzgas gemäß Anspruch 1 bzw. Anspruch 6.

Es existieren zahlreiche verschiedene Lichtbogenschweiß- und Lichtbogenlötverfahren. Einige von ihnen arbeiten mit einer abschmelzenden Elektrode unter Schutzgas. Beim Schweißen oder Löten bewirkt das Schutzgas die Abschirmung der abschmelzenden Elektrode, des Lichtbogens und des Schweiß- oder Lötbades gegen die Atmosphäre. Zu den Lichtbogenschweißverfahren, bei denen eine abschmelzende Elektrode eingesetzt und unter Schutzgas gearbeitet wird, zählt das Metallschutzgasschweißen (MSG-Schweißen). MSG-Schweißverfahren zeichnen sich dadurch aus, dass der Lichtbogen zwischen einer abschmelzenden Elektrode, die gleichzeitig einen Schweißzusatz darstellt, und dem in Bearbeitung befindlichen Werkstück brennt. MSG-Schweißverfahren sind mit dem Metall-Inertgasschweißen (MIG-Schweißen) und dem Metall-Aktivgasschweißen (MAG-Schweißen) in zwei grundlegende Verfahrensarten untergliederbar. Analog existieren MSG-Lötverfahren. Beim MSG-Schweißen und MSG-Löten kann die abschmelzende Elektrode durch einen Draht gebildet werden, dessen Vorschub automatisch durch eine Drahtfördervorrichtung erfolgt.

Aus der Praxis sind verschiedene Verfahren, einen Lichtbogen zu zünden, bekannt. Eine besonders häufige Vorgehensweise ist die sogenannte Kontaktzündung. Dabei wird die abschmelzende Elektrode solange hin zur Oberfläche des zu bearbeitenden Werkstücks gefördert, bis sie diese kontaktiert. Es entsteht ein Kurzschluss. Wegen des kleinen Querschnitts der Spitze der abschmelzenden Elektrode, die zum Zweck der Kontaktzündung in Berührung mit der Oberfläche des zu bearbeitenden Werkstücks gebracht wird, stellen sich eine hohe Stromdichte und damit eine starke Erwärmung ein. Material beginnt zu verdampfen. Es kommt zu einem Freibrennen der abschmelzenden Elektrode, so dass ein Lichtbogen zündet.

Als problematisch hat sich jedoch erwiesen, dass die Spitze der abschmelzenden Elektrode, die zum Zweck der Kontaktzündung in Berührung mit der Oberfläche des zu bearbeitenden Werkstücks gebracht wird, häufig so beschaffen ist, dass es ohne hohen Druck der abschmelzenden Elektrode auf die Oberfläche nicht zu einem ausreichend großen Stromfluss zwischen abschmelzender Elektrode und Werkstück kommt. Die benötigte Temperatur der abschmelzenden Elektrode stellt sich nicht oder nicht hinreichend schnell ein.

Elektrisch schlecht leitfähige Ablagerungen an der Spitze der abschmelzenden Elektrode sind als eine Ursache dieses Problems zu sehen. Nach Beendigung eines Schweiß- oder Lötvorgangs kühlt die abschmelzende Elektrode ab. Dadurch beginnt der aufgeschmolzene Teil der abschmelzenden Elektrode, die Schmelze, zu erstarren. An ihrer Spitze bildet die abschmelzende Elektrode einen Tropfen oder eine Perle aus. Der Durchmesser eines solchen Tropfens kann den der abschmelzenden Elektrode um ein Mehrfaches übersteigen. Während des Abschmelzens der Elektrode werden Schlacken gebildet, die auf dem Tropfen liegen. Ein Grund für die Schlackenbildung kann in oxidierenden Komponenten, die im Schutzgas enthalten sind, zu sehen sein. Andererseits können oxidierende Stoffe, die aus dem bearbeiteten Werkstück oder aus der abschmelzenden Elektrode ausgelöst werden oder die durch ein Vermischen des Schutzgases mit der Umgebungsatmosphäre in Kontakt mit der abschmelzenden Elektrode kommen, für die Schlackenbildung verantwortlich sein.

Ist die Menge der Schmelze bei Beendigung eines Schweißvorgangs vergleichsweise gering, werden die Schlacken vor der Erstarrungsfront hergeschoben. In der Folge verbleiben sie letztlich an der Position, an der die Erstarrung zuletzt stattgefunden hat. Da bei vergleichsweise geringer Menge der Schmelze bei Beendigung eines Schweißvorgangs die Erstarrung konzentrisch vom festen Ende der abschmelzenden Elektrode beginnend erfolgt, sammeln sich die Schlacken an der Spitze des freien Endes der abschmelzenden Elektrode. Größere Mengen an Schmelze bei Beendigung des Schweißvorgangs bringen eine langsamere Abkühlung und damit ein langsameres Erstarren des Tropfens mit sich. Hierdurch kann sich eine Oxidschicht auf der Oberfläche des Tropfens bilden. Man spricht auch von Zunderbildung.

In beiden Fällen ist die elektrische Leitfähigkeit der Spitze des freien Endes der abschmelzenden Elektrode vermindert. Als eine Folge können Schwierigkeiten beim erneuten Zünden eines Lichtbogens, wie es zum Einleiten eines weiteren Schweißvorgangs notwendig ist, auftreten.

So ist in der Praxis zu beobachten, dass sich die abschmelzende Elektrode nicht schnell genug erwärmt. Handelt es sich bei der abschmelzenden Elektrode um einen Schweißdraht, der mittels einer Drahtfördervorrichtung vorgeschoben wird, kann es passieren, dass der Schweißdraht abknickt, was den Materialaufwand ansteigen lassen und zur Verunreinigungen des Werkstücks beim Schweißen oder Löten führen kann. Erst nach dem Abknicken des Schweißdrahtes oder dem Abplatzen von Verunreinigungen mit geringer elektrischer Leitfähigkeit wie Schlacke oder Zunder kann es zur Zündung eines Lichtbogens kommen.

Ebenso ist es möglich, dass in dem Moment des Aufsetzens der Spitze der abschmelzenden Elektrode auf das zu bearbeitende Werkstück keine spontane Lichtbogenzündung eintritt, sondern die Kontaktfläche von abschmelzender Elektrode und Werkstück aufschmilzt. Aufgrund einer damit verbundenen Vergrößerung des Volumens der Schmelze kann sich der Kontaktwiderstand von abschmelzender Elektrode und Werkstück verringern und in der Folge die abschmelzende Elektrode am Werkstück festkleben. In diesem Fall kann es dazu kommen, dass das freie Ende der abschmelzende Elektrode durchgehend erschmolzen wird und daher entweder ausgeworfen wird bevor es zu einer Lichtbogenzündung kommt, oder ausgeworfen wird nachdem es zwar zu einer Lichtbogenzündung gekommen ist, der Lichtbogen aber mit dem Auswurf des durchgehend erschmolzenen freien Endes der abschmelzenden Elektrode abreißt, da die Distanz zwischen der Spitze der Elektrode und der Werkstücksoberfläche mit dem Auswurf zu groß wird.

Für den Zündvorgang ist ein guter elektrischer Kontakt zwischen abschmelzender Elektrode und Werkstück mit einer möglichst kleinen Berührfläche notwendig. Er soll möglichst auch dann entstehen, wenn die abschmelzende Elektrode mit nur geringer Kraft auf das zu bearbeitende Werkstück aufgesetzt wird und die Werkstücksoberfläche uneben ist. Dies kann erreicht werden, indem der abschmelzenden Elektrode eine möglichst spitze Form verliehen wird.

Aus der deutschen Gebrauchsmusterschrift 79 12 929 ist eine elektrische Schweißmaschine bekannt, die einen Schweißbrenner umfasst, dem eine Drahtabschneidevorrichtung zugeordnet ist. Bei der Schweißmaschine kann es sich um eine MIG- oder MAG-Schweißmaschine handeln. Durch den Einsatz der Drahtabschneidevorrichtung soll erreicht werden, dass eine den Zündvorgang behindernden Kugel an der Drahtspitze beseitigt wird.

Nachteilig ist bei dieser Lösung jedoch, dass sie mit hohem mechanischem Aufwand verbunden ist, der sich in erhöhten Herstellungskosten und einem gesteigerten Wartungsbedarf niederschlägt. Zudem muss für die Montage der Drahtabschneidevorrichtung am Schweißbrenner hinreichend viel Raum vorhanden sein. Als ein weiterer Nachteil ist der Zeitaufwand zu nennen, den ein solches aufwendiges mechanisches Abschneiden des Schweißdrahtes verursacht und der besonders stark ins Gewicht fällt, wenn eine Vielzahl von Schweißvorgängen hintereinander ausgeführt wird. Dieses Problem tritt bei einem manuellen Abschneiden der abschmelzenden Elektrode in noch höherem Ausmaß auf.

Die Patentschrift DE 34 20 435 schlägt eine Einrichtung zum Schutzgaslichtbogenschweißen mit abschmelzender Elektrode vor, bei der mittels einer Stromimpulsvorrichtung eine sich am Ende eines Schweißvorgangs am freien Elektrodenende ausbildende Materialanhäufung entfernt werden kann. Dazu wird am Ende des Schweißvorgangs die Stromimpulsvorrichtung genutzt, um ein Endstromimpuls mit einer Amplitude von 400 A zu erzeugen und für eine vorgegebene Zeitdauer aufrechtzuerhalten. Die Patentschrift lehrt, dass sich aufgrund des Endstromimpulses beim Verdampfen der Drahtperle ein kegelförmiges Schweißdrahtende ausbildet, das weitere Lichtbogenzündungen begünstigt. Aus der WO 2005/042 199 sind ein Verfahren zum Steuern und/oder Regeln eines Schweißprozesses und ein Schweißgerät zur Durchführung eines Schweißprozesses bekannt.

Diese Vorgehensweise ist jedoch nicht geeignet, eine Ansammlung schlecht leitender Rückstände wie zum Beispiel Schlacke unmittelbar am Ende der Spitze der abschmelzenden Elektrode zu verhindern. Wie oben erläutert, führt auch eine vergleichsweise geringe Menge an Schmelze bei Beendigung eines Schweißvorgangs zur Entstehung einer Schlackeablagerung genau an der Fläche der abschmelzenden Elektrode, die zum Zweck einer erneuten Zündung eines Lichtbogens auf die Oberfläche eines zu bearbeitenden Werkstücks aufgesetzt wird. Damit treten weiterhin Schwierigkeiten bei der Zündung auf.

Es ist daher eine Aufgabe der vorliegenden Erfindung, Verfahren und Vorrichtungen zur Verfügung zu stellen, die es erlauben, eine abschmelzende Elektroden eines Lichtbogenschweiß- oder Lichtbogenlötgeräts dahingehend zu konditionieren, dass sich ein gegenüber dem Stand der Technik verbessertes Zündverhalten einstellt, insbesondere dass ein spontanes und sicheres Zünden eines Lichtbogens ermöglicht wird.

Gemäß eines ersten Aspekts der vorliegenden Erfindung wird diese Aufgabe bei einem Verfahren der eingangs genannten Art gelöst durch den Betrieb des Lichtbogenschweiß- oder Lichtbogenlötgeräts im Bereich des Sprühlichtbogens für eine definierte Zeitspanne und mit einer definierten Lichtbogenstromstärke, so dass die abschmelzende Elektrode eine kegelförmige Spitze mit einem festen Kern ausbildet, in einem ersten Schritt, das Absenken des Lichtbogenstroms mit einer vordefinierten Rampe unter eine kritische Stromstärke und anschließendes Aufrechterhalten des Lichtbogens für eine definierte Zeitspanne in einem zweiten Schritt und das Durchlaufen einer Impulsstromphase an deren Ende der Lichtbogenstrom soweit abgesenkt wird, dass der Lichtbogen erlischt, in einem dritten Schritt.

Gemäß des ersten Aspekts der Erfindung wird diese Aufgabe bei einer Lichtbogenstromsteuereinheit der eingangs genannten Art dadurch gelöst, dass die Lichtbogenstromsteuereinheit konfiguriert ist, den Lichtbogenstrom dahingehend zu steuern, dass das Lichtbogenschweiß- oder Lichtbogenlötgerät in einem ersten Schritt für eine definierte Zeitspanne und mit einer definierten Lichtbogenstromstärke im Bereich des Sprühlichtbogens betrieben wird, so dass die abschmelzende Elektrode eine kegelförmige Spitze mit einem festen Kern ausbildet, in einem zweiten Schritt den Lichtbogenstrom mit einer vordefinierten Rampe unter eine kritische Stromstärke abzusenken und anschließend den Lichtbogen für eine definierte Zeitspanne aufrechtzuerhalten, in einem dritten Schritt den Lichtbogenstrom dahingehend zu steuern, dass er eine Impulsstromphase durchläuft, und den Lichtbogenstrom am Ende der Impulsstromphase soweit abzusenken, dass der Lichtbogen erlischt.

Gemäß eines zweiten Aspekts der vorliegenden Erfindung wird diese Aufgabe bei einem Verfahren der eingangs genannten Art gelöst durch den Betrieb des Lichtbogenschweiß- oder Lichtbogenlötgeräts im Bereich des Sprühlichtbogens für eine definierte Zeitspanne und mit einer definierten Lichtbogenstromstärke, so dass die abschmelzende Elektrode eine kegelförmige Spitze mit einem festen Kern ausbildet, in einem ersten Schritt und das Absenken des Lichtbogenstroms mit gegenüber einem bloßen Abschalten der Energiezufuhr zur abschmelzenden Elektrode des Lichtbogenschweiß- oder Lichtbogenlötgeräts gesteigerter Dynamik soweit, dass der Lichtbogen erlischt, in einem anschließenden zweiten Schritt.

Gemäß des zweiten Aspekts der Erfindung wird diese Aufgabe bei einer Lichtbogenstromsteuereinheit der eingangs genannten Art dadurch gelöst, dass die Lichtbogenstromsteuereinheit konfiguriert ist, den Lichtbogenstrom dahingehend zu steuern, dass das Lichtbogenschweiß- oder Lichtbogenlötgerät in einem ersten Schritt für eine definierte Zeitspanne und mit einer definierten Lichtbogenstromstärke im Bereich des Sprühlichtbogens betrieben wird, so dass die abschmelzende Elektrode eine kegelförmige Spitze mit einem festen Kern ausbildet, und in einem anschließenden zweiten Schritt den Lichtbogenstrom mit gegenüber einem bloßen Abschalten der Energiezufuhr zur abschmelzenden Elektrode des Lichtbogenschweiß- oder Lichtbogenlötgeräts gesteigerter Dynamik soweit abzusenken, dass der Lichtbogen erlischt.. Beim Lichtbogenschweißen oder Lichtbogenlöten stellen sich je nach der Wahl der Schweißparameter unterschiedliche Lichtbogentypen ein, die sich vor allem im Werkstoffübergang unterscheiden.

Bei geringen Schweißstromstärken stellt sich der sogenannte Kurzlichtbogen ein. Beim Kurzlichtbogenprozess geht der Werkstoff ausschließlich im Kurzschluss über, wenn der Tropfen durch die kontinuierliche Drahtzufuhr und durch das Tropfenwachstum die Schmelzbadoberfläche berührt. Dabei verlischt der Lichtbogen und zündet wieder, wenn der Tropfen in Folge des hohen Kurzschlussstromes abgeschnürt ist.

Bei einer Erhöhung des Schweißstromes tritt ab einer kritischen Stromstärke der kurzschlussfreie Werkstoffübergang auf. In einem Übergangslichtbogenbereich, dem sogenannten Mischlichtbogen, geht dennoch der Tropfen teilweise im Kurzschluss über. Die kritische Stromstärke ist vom Material und vom Durchmesser der abschmelzenden Elektrode abhängig. Bei einer weiteren Erhöhung des Stromes über die kritische Stromstärke hinaus ergeben sich eine Erhöhung der Tropfenfrequenz und gleichzeitig eine deutliche Abnahme der Tropfengrößen.

Durch eine weitere Erhöhung des Schweißstromes erreicht man den Bereich des sogenannten Sprühlichtbogens, welcher durch einen völlig kurzschlussfreien und feintröpfigen Werkstoffübergang gekennzeichnet ist. Mit dem Sprühlichtbogen stellt sich im Strom- und Spannungsverlauf ein zeitlich sehr gleichmäßiger Schweißprozess ein. Für die Tropfenablösung im Sprühlichtbogen ist in erster Linie der sogenannte Pincheffekt verantwortlich, bei dem eine Einschnürung des Tropfens in Folge der Lorenzkraft erfolgt. Im Bereich des Sprühlichtbogens erfolgt also während der gesamten Zeit stets ein feintröpfiger Werkstoffübergang.

Der Betrieb eines Lichtbogenschweiß- oder Lichtbogenlötgeräts zum Schweißen- oder Löten unter Schutzgas im Bereich des Sprühlichtbogens für eine geeignet definierte Zeitspanne und mit einer geeignet definierten Lichtbogenstromstärke kann dazu führen, dass das freie Ende der abschmelzenden Elektrode in einem äußeren Bereich aufschmilzt, während ein innerer Kern des freien Endes der abschmelzenden Elektrode in einem festen Zustand verbleibt. Zudem treten durch den Plasmastrom im Bereich des Sprühlichtbogens Scherkräfte an der Oberfläche der abschmelzenden Elektrode auf, die die Schmelze über den festen Kern der abschmelzenden Elektrode hin zu deren freiem Ende treiben, wo sie sich in einem feinen Strahl ablöst. Daher kann durch den Betrieb eines Lichtbogenschweiß- oder Lichtbogenlötgeräts zum Schweißen- oder Löten unter Schutzgas im Bereich des Sprühlichtbogens für eine geeignet definierte Zeitspanne und mit einer geeignet definierten Lichtbogenstromstärke ein kegelförmiges, spitz zulaufendes freies Ende, also eine kegelförmige Spitze, der abschmelzenden Elektrode ausgebildet werden, die einen festen, nicht erschmolzenen Kern aufweist.

Im Folgenden wird zunächst der erste Aspekt der Erfindung erläutert bevor sich die Erklärung des zweiten Aspekts der Erfindung anschließt.

Entsprechend des ersten Aspekts der vorliegenden Erfindung steht der Betrieb eines Lichtbogenschweiß- oder Lichtbogenlötgeräts mit einer abschmelzenden Elektrode zum Schweißen oder Löten unter Schutzgas im Bereich des Sprühlichtbogens für eine definierte Zeitspanne und mit einer definierten Lichtbogenstromstärke, so dass die abschmelzende Elektrode eine kegelförmige Spitze mit einem festen Kern ausbildet, in einem ersten Schritt am Anfang des erfindungsgemäßen Verfahrens bzw. ist eine erfindungsgemäße Lichtbogenstromsteuereinheit konfiguriert, den Lichtbogenstrom dahingehend zu steuern, dass das Lichtbogenschweiß- oder Lichtbogenlötgerät in einem ersten Schritt für eine definierte Zeitspanne und mit einer definierten Lichtbogenstromstärke im Bereich des Sprühlichtbogens betrieben wird, so dass die abschmelzende Elektrode eine kegelförmige Spitze mit einem festen Kern ausbildet.

Es ist keine zwingende Vorraussetzung der Erfindung, dass der Betrieb des Lichtbogenschweiß- oder Lichtbogenlötgeräts im Bereich des Sprühlichtbogens nur herbeigeführt wird, um die gewünschte Form der abschmelzenden Elektrode zu erreichen. Ebenso kann ein Schweiß- oder Lötvorgang, der im Bereich des Sprühlichtbogens durchgeführt wird, den ersten Verfahrensschritt bilden bzw. der Schweiß- oder Lötvorgang im Bereich des Sprühlichtbogens durch die Lichtbogenstromsteuereinheit in dem Sinne berücksichtigt werden, dass diese am Ende des Schweiß- oder Lötvorgangs zum zweiten Steuerungsschritt übergeht. Mit anderen Worten muss also kein separater Sprühlichtbogen erzeugt werden, wenn der Betrieb im Bereich des Sprühlichtbogens bereits vorliegt oder vorlag. Voraussetzung hierfür ist jedoch dass dabei die Zeitspanne, für die der Betrieb im Bereich des Sprühlichtbogens erfolgt, sowie die Lichtbogenstromstärke während des Betriebs im Bereich des Sprühlichtbogens derart gewählt sind, dass die abschmelzende Elektrode eine kegelförmige Spitze mit einem festen Kern ausbilden kann. Die definierte Lichtbogenstromstärke muss dabei nicht über die gesamte Dauer der definierten Zeitspanne konstant sein. So kann sich der Betrieb im Bereich des Sprühlichtbogens auch aus mehreren Impulsen zusammensetzten, die jeweils eine Lichtbogenstromstärke aufweisen, bei der sich ein Sprühlichtbogen einstellt, wobei die Summe der Dauer der einzelnen Impulse die definierte Zeitspanne des Betriebs im Bereich des Sprühlichtbogen ergibt.

Es ist wünschenswert, die spitze Form der abschmelzenden Elektrode, die sich aufgrund des Betriebs im Bereich des Sprühlichtbogens ergibt, bis zum einem nächsten Lichtbogenzündvorgang aufrechtzuerhalten.

Entsprechend des ersten Aspekts der vorliegenden Erfindung beinhaltet ein zweiter Schritt das Absenken des Lichtbogenstroms mit einer vordefinierten Rampe unter eine kritische Stromstärke und anschließendes Aufrechterhalten des Lichtbogens für eine definierte Zeitspanne bzw. ist die erfindungsgemäße Lichtbogenstromsteuereinheit konfiguriert, in einem zweiten Schritt den Lichtbogenstrom mit einer vordefinierten Rampe unter eine kritische Stromstärke abzusenken und anschließend den Lichtbogen für eine definierte Zeitspanne aufrechtzuerhalten.

Durch dass Unterschreiten der kritischen Stromstärke während des zweiten Schritts wird der Bereich des Sprühlichtbogens verlassen. Eine geeignete vorgegebene Rampe, mit der der Lichtbogenstrom abgesenkt wird, kann erlauben, dass eine im ersten Schritt ausgebildete kegelförmige Spitze der abschmelzenden Elektrode und deren fester Kern erhalten bleiben, ohne dass die Schmelze auf dem festen Kern der kegelförmigen Spitze der abschmelzenden Elektrode vollständig erstarrt. Zudem wird durch das Absenken des Lichtbogenstroms mit einer vordefinierten Rampe die Möglichkeit eröffnet, den Energieeintrag in die Schmelze und damit den zeitlichen Verlauf ihrer Temperatur zu steuern. Für unterschiedliche Materialen verschiedener abschmelzender Elektroden kann es notwendig sein, unterschiedliche Rampen vorzugeben. Ebenso kann die Geometrie der abschmelzenden Elektrode, beispielsweise ihr Durchmesser, eine Rolle spielen. Die Zusammensetzung des Schutzgases kann ebenfalls einen Einfluss auf die Bildung schlecht leitfähiger Rückstände haben und ist daher gegebenenfalls bei der Wahl der Rampe zu berücksichtigen.

Das Aufrechterhalten des Lichtbogens für eine definierte Zeitspanne im Anschluss an Absenken des Lichtbogenstroms ist mit einem Energieeintrag verbunden, durch den die nicht erstarrte Schmelze, die zuvor fadenförmig vorgelegen haben kann, in eine kompaktere Form überführt werden kann. Zudem ist.es möglich, die Menge und die Temperatur der Schmelze durch entsprechende Wahl der Schweißeinstellungen in der Phase des Aufrechterhaltens des Lichtbogens zu steuern. Das Material, aus dem die abschmelzende Elektrode besteht, und der Durchmesser der abschmelzenden Elektrode sind dabei von Bedeutung bezüglich des Zusammenhangs zwischen Energieeintrag und Temperatur der Schmelze.

Das Durchlaufen des zweiten Schritts kann bewirken, dass die Zeit, die die Schmelze in einem Temperaturbereich verbringt, in dem sie für die Oxidation und damit für Schlacke- und Zunderbildung anfällig ist, minimiert wird. Etwaige geringfügige Reste der Schmelze am Ende der Spitze der abschmelzenden Elektrode nach dem Durchlaufen der erfindungsgemäßen Schritte können die Leitfähigkeit des Endes der Spitze der abschmelzenden Elektrode dann lediglich in reduziertem Umfang beeinträchtigen.

Exemplarische Ausführungsformen der Erfindung sehen vor, dass die vordefinierte Rampe zum Absenken des Lichtbogenstroms und die definierte Zeitspanne des Aufrechterhaltens des Lichtbogens im zweiten Schritt abhängig von dem Material der abschmelzenden Elektrode, dem Durchmesser der abschmelzenden Elektrode und von der Zusammensetzung des Schutzgases definiert sind. Ein Vorteil dieser Ausführungsform kann sein, dass die Abhängigkeit der Temperatur der Schmelze der abschmelzenden Elektrode, der Menge der Schmelze und der Bildung von schlecht leitfähigen Rückständen wie Schlacke oder Zunder vom Material und Durchmesser der abschmelzenden Elektrode und der Zusammensetzung des Schutzgases im zweiten Schritt berücksichtigt wird. Dann können die Temperatur der Schmelze und die Menge der Schmelze gezielt gesteuert werden und der Bildung von Schlacke und Zunder gezielt entgegengewirkt werden.

Gemäß einiger Ausführungsbeispiele der Erfindung ist die Lichtbogenstromsteuereinheit konfiguriert, im zweiten Schritt den Lichtbogenstrom auf ein Wert im Bereich von 3 A bis 50 A abzusenken, wobei die Dauer des zweiten Schritts zwischen 0,5 ms und 5 ms beträgt. Diese Parametrisierung kann das Erreichen des gewünschten Verhaltens der Schmelze erlauben, ohne eine unnötig lange Dauer des zweiten Schritts zu bewirken.

Entsprechend des ersten Aspekts der vorliegenden Erfindung beinhaltet ein dritter Schritt das Durchlaufen einer Impulsstromphase an deren Ende der Lichtbogenstrom soweit abgesenkt wird, dass der Lichtbogen erlischt, bzw. ist die erfindungsgemäße Lichtbogenstromsteuereinheit konfiguriert, in einem dritten Schritt den Lichtbogenstrom dahingehend zu steuern, dass er eine Impulsstromphase durchläuft, und den Lichtbogenstrom am Ende der Impulsstromphase soweit abzusenken, dass der Lichtbogen erlischt.

In der Impulsstromphase kommt es aufgrund des Pincheffekts zum weitgehenden Ablösen der auf dem festen Kern der abschmelzenden Elektrode angelagerten Schmelze in Form eines einzelnen Tropfens. Die durch den zweiten Schritt erreichbare kompakte Form der Schmelzeerlaubt, dass sie im dritten Schritt durch den Pincheffekt zu einem großen Teil von der abschmelzenden Elektrode entfernt wird, und somit dem Ziel einer spitz zulaufenden Form der abschmelzenden Elektrode dienlich sein. Zum Zweck des weitgehenden Ablösens der Schmelze in Form eines einzelnen Tropfens in der Impulsstromphase liegt die Lichtbogenstromstärke zumindest zeitweise oberhalb der kritischen Stromstärke. Durch die aus dem Abschnüren des Tropfens resultierende Impulsgegenkraft und die Oberflächenspannung des an der abschmelzenden Elektrode verbliebenen Anteils der Schmelze bewegt sich die Restschmelze auf dem festen Kern der kegelförmigen Spitze der abschmelzenden Elektrode weg vom Ende der Elektrodenspitze.

Durch das Absenken des Lichtbogenstroms am Ende der Impulsstromphase soweit, dass der Lichtbogen erlischt, kann erreicht werden, dass der Rest der Schmelze an der abschmelzenden Elektrode abkühlt und die Restschmelze an ihrer gegenüber dem Ende der Spitze der abschmelzenden Elektrode örtlich verschobenen Position auf dem festen Kern der kegelförmigen Spitze der abschmelzenden Elektrode erstarrt. Schlacke oder Zunder in oder auf der Oberfläche der gegenüber dem Ende der Spitze der abschmelzenden Elektrode örtlich verschoben erstarrten Schmelze kann jedoch unkritisch für den Zündvorgang sein, denn Schlacke oder Zunder lagern sich nicht am Ende der Spitze der abschmelzenden Elektrode an.

Nach dem Durchlaufen der drei erfindungsgemäßen Schritte kann sich die abschmelzende Elektrode im festen, nicht erschmolzenen Zustand durch eine spitz zulaufende, konische Form auszeichnen, wobei die das Ende der Spitze der Elektrode weitgehend frei von elektrisch schlecht leitfähigen Rückständen wie Schlacke und Zunder ist. Auf diese Weise kann erreicht werden, dass die abschmelzende Elektrode für eine spontane und sichere Kontaktzündung beim Berühren der Oberfläche eines zu bearbeitenden Werkstücks besonders geeignet ist.

Es kann dabei vorgesehen sein, dass der Lichtbogenstrom im Verlauf der Impulsstromphase eine Amplitude annimmt, die die Amplitude des Lichtbogenstroms während des ersten Schritts übersteigt, bzw. es kann die Lichtbogenstromsteuereinheit konfiguriert sein, im Verlauf der Impulsstromphase den Lichtbogenstrom dahingehend zu steuern, dass er eine Amplitude annimmt, die die Amplitude des Lichtbogenstroms während des ersten Schritts übersteigt. Weiterhin kann vorgesehen sein, die Impulsstromphase des dritten Schritts in einer Zeit zu durchlaufen, die unter der Dauer der definierten Zeitspanne des Betriebs im Bereich des Sprühlichtbogens im ersten Schritt liegt, bzw. kann die Lichtbogenstromsteuereinheit konfiguriert sein, den Lichtbogenstrom dahingehend zu steuern, die Impulsstromphase des dritten Schritts in einer Zeit zu durchlaufen, die unter der Dauer der definierten Zeitspanne des Betriebs im Bereich des Sprühlichtbogens im ersten Schritt liegt.

Ausführungsformen gemäß des ersten Aspekts der Erfindung sehen vor, dass am Ende der Impulsstromphase der Lichtbogenstrom mit gegenüber einem bloßen Abschalten der Energiezufuhr zur abschmelzenden Elektrode des Lichtbogenschweiß- oder Lichtbogenlötgeräts gesteigerter Dynamik soweit abgesenkt wird, dass der Lichtbogen erlischt, bzw. dass die Lichtbogenstromsteuereinheit konfiguriert ist, im dritten Schritt den Lichtbogenstrom am Ende der Impulsstromphase mit gegenüber einem bloßen Abschalten der Energiezufuhr zur abschmelzenden Elektrode des Lichtbogenschweiß- oder Lichtbogenlötgeräts gesteigerter Dynamik soweit abzusenken, dass der Lichtbogen erlischt.

Gemäß beider Aspekte der Erfindung kann unter dem Absenken des Lichtbogenstroms mit gegenüber einem bloßen Abschalten der Energiezufuhr zur abschmelzenden Elektrode des Lichtbogenschweiß- oder Lichtbogenlötgeräts gesteigerter Dynamik verstanden werden, dass in einem gegebenen Zeitraum' die Lichtbogenstromstärke um einen größeren Betrag abgesenkt wird, als dies durch bloßes Abschalten der Energiezufuhr zur abschmelzenden Elektrode möglich wäre. Anders ausgedrückt ist die Stromabfallgeschwindigkeit dann höher als beim bloßen Abschalten der Energiezufuhr zur abschmelzenden Elektrode. Die Flanke des mit gesteigerter Dynamik abgesenkten Lichtbogenstroms kann also steiler abfallen.

Durch diese Ausgestaltung des Endes der Impulsstromphase kann erreicht werden, dass durch die trotz der nicht zu vernachlässigende Induktivität des Schweiß- bzw.

Lötstromkreises erfolgte schnelle Reduktion der Lichtbogenstromstärke der Rest der Schmelze an der abschmelzenden Elektrode mit besonders hoher Geschwindigkeit abkühlt. Dies wiederum kann bewirken, dass die Restschmelze nur für kurze Zeit in einem Temperaturbereich belassen wird, in dem sie für Zunder- und Schlackebildung anfällig ist. Des Weiteren kann auf diese Weise besonders verlässlich sichergestellt werden, dass die Restschmelze an ihrer gegenüber dem Ende der Spitze der abschmelzenden Elektrode örtlich verschobenen Position auf dem festen Kern der kegelförmigen Spitze der abschmelzenden Elektrode erstarrt und nicht etwa zum Ende der Elektrodenspitze fließen kann.

Ausführungsformen gemäß des ersten Aspekts der Erfindung sehen vor, dass die Impulsstromphase des dritten Schritts in einer Zeit zwischen 1 ms und 3 ms durchlaufen wird, bzw. dass die Lichtbogenstromsteuereinheit konfiguriert ist, den Lichtbogenstrom dahingehend zu steuern, die Impulsstromphase des dritten Schritts in einer Zeit zwischen 1 ms und 3 ms zu durchlaufen. Auf diese Weise kann einerseits erreicht werden, dass sich aufgrund des Pincheffekts nur ein Tropfen aus Schmelze von der abschmelzenden Elektrode löst. Das Ablösen mehrerer Tropfen kann gegebenenfalls nutzlos im Hinblick auf das Ziel sein, dass die Elektrode eine spitz zulaufende Form erhalten und weitgehend frei von elektrisch schlecht leitfähigen Rückständen sein soll. Eine übermäßig lange Dauer der Impulsstromphase, die vom Ablösen mehrerer Tropfen begleitet ist, kann zu einer unnötigen Verlängerung der Prozessdauer führen und daher ineffizient sein. Eine maximale Dauer der Impulsstromphase von 3 ms kann dies verhindern. Andererseits kann es vorteilhaft sein, eine Mindestdauer von 1 ms nicht zu unterschreiten, um sicherzustellen, dass ein ausreichender Energieeintrag stattfindet, so dass sich die Schmelze überhaupt von der abschmelzenden Elektrode ablöst.

Im Folgenden wird der zweite Aspekt der Erfindung erläutert.

Das erfindungsgemäße Verfahren und die erfindungsgemäße Lichtbogenstromsteuereinheit gemäß des zweiten Aspekts stimmen mit dem Verfahren bzw. der Lichtbogenstromsteuereinheit gemäß des ersten Aspekts dahingehend überein, dass der Betrieb des Lichtbogenschweiß- oder Lichtbogenlötgeräts im Bereich des Sprühlichtbogens für eine definierte Zeitspanne und mit einer definierten Lichtbogenstromstärke, so dass die abschmelzende Elektrode eine kegelförmige Spitze mit einem festen Kern ausbildet, in einem ersten Schritt am Anfang des erfindungsgemäßen Verfahrens steht bzw. die Lichtbogenstromsteuereinheit konfiguriert ist, den Lichtbogenstrom dahingehend zu steuern, dass das Lichtbogenschweiß- oder Lichtbogenlötgerät in einem ersten Schritt für eine definierte Zeitspanne und mit einer definierten Lichtbogenstromstärke im Bereich des Sprühlichtbogens betrieben wird, so dass die abschmelzende Elektrode eine kegelförmige Spitze mit einem festen Kern ausbildet.

Gemäß des zweiten Aspekts der Erfindung ist das Absenken des Lichtbogenstroms mit gegenüber einem bloßen Abschalten der Energiezufuhr zur abschmelzenden Elektrode des Lichtbogenschweiß- oder Lichtbogenlötgeräts gesteigerter Dynamik soweit, dass der Lichtbogen erlischt, in einem anschließenden zweiten Schritt vorgesehen bzw. ist die erfindungsgemäße Lichtbogenstromsteuereinheit konfiguriert, in einem anschließenden zweiten Schritt den Lichtbogenstrom mit gegenüber einem bloßen Abschalten der Energiezufuhr zur abschmelzenden Elektrode des Lichtbogenschweiß- oder Lichtbogenlötgeräts gesteigerter Dynamik soweit abzusenken, dass der Lichtbogen erlischt.

Dieser zweite Schritt kann dazu dienen, dem Problem der Bildung eines schlecht leitfähigen Tropfens am Ende der Spitze der abschmelzenden Elektrode zu begegnen und gleichzeitig die Kegelform der Spitze der abschmelzenden Elektrode beizubehalten. Durch die gesteigerte Dynamik beim Absenken des Lichtbogenstroms bis hin zum Erlöschen des Lichtbogens kann erreicht werden, dass durch die trotz der nicht zu vernachlässigende Induktivität des Schweiß- bzw. Lötstromkreises erfolgte schnelle Reduktion der Lichtbogenstromstärke der Rest der Schmelze an der abschmelzenden Elektrode mit besonders hoher Geschwindigkeit abkühlt und die Schmelze nicht ausreichend lange Zeit in einem Temperaturbereich verbleibt, in dem sie durch Oxidation elektrisch schlecht leitfähige Rückstände wie Schlacken und Zunder ausbilden kann. Zudem bewegt sich beim Ablösen des letzten Schmelzetropfens aufgrund des Pincheffekts am Ende des Betriebs der Lichtbogenschweiß- bzw. Lichtbogenlötgeräts im Bereich des Sprühlichtbogens durch die aus dem Abschnüren des Tropfens resultierende Impulsgegenkraft und die Oberflächenspannung des an der abschmelzenden Elektrode verbliebenen Anteils der Schmelze dieser Anteil auf dem festen Kern der kegelförmigen Spitze der abschmelzenden Elektrode weg vom Ende der Elektrodenspitze. Des Weiteren kann auf diese Weise besonders verlässlich sichergestellt werden, dass die Restschmelze an ihrer gegenüber dem Ende der Spitze der abschmelzenden Elektrode örtlich verschobenen Position auf dem festen Kern der kegelförmigen Spitze der abschmelzenden Elektrode erstarrt und nicht etwa zum Ende der Elektrodenspitze fließen kann. In der Folge bleibt die spitz zulaufende Form der abschmelzenden Elektrode erhalten während die Ablagerung schlecht leitfähiger Rückstände am Ende der Spitze der abschmelzenden Elektrode verhindert wird. Des Weiteren kann durch das besonders dynamische Absenken des Lichtbogenstroms die Ausscheidung von Mangansilikaten unterbunden werden.

Die Lichtbogenstromsteuereinheit unterliegt gemäß beiden Aspekten der Erfindung keinerlei Beschränkungen bezüglich der Komponenten, aus denen sie besteht. So kann sie beispielsweise einen Prozessor umfassen, der die nötigen Steueroperationen vornimmt und dazu auf einen Speicher, beispielsweise einen Flash-Speicher, zurückgreift, in dem die genaue Art und Reihenfolge der auszuführenden Steueroperationen hinterlegt ist. Alternativ sind der Einsatz einer anwendungsspezifischen integrierten Schaltung (application specific integrated circuit - ASIC), eines Field Programmable Gate Array (FPGA) oder beliebige andere Lösungen denkbar. Des Weiteren sei erwähnt, dass die Lichtbogenstromsteuereinheit auch mit der Fähigkeit zu Regelung des Lichtbogenstroms ausgestattet sein kann. Zu diesem Zweck kann sie Messmittel zur Erfassung von Schweißparametern beinhalten, so dass das Überwachen des Prozesses möglich wird. Wenn hier vom Steuern des Lichtbogenstroms die Rede ist, ist stets auch die Regelung des Lichtbogenstroms von diesem Begriff umfasst. Eine erfindungsgemäße Lichtbogenstromsteuereinheit kann gegebenenfalls den Lichtbogenstrom auch nur indirekt steuern, in dem sie unmittelbar zunächst eine mit dem Lichtbogenstrom I_{S} in Zusammenhang stehende Größe steuert. Beispielsweise kann diese mit dem Lichtbogenstrom in Zusammenhang stehende Größe die Spannung sein, die zwischen abschmelzender Elektrode und dem zu bearbeitenden Werkstück anliegt. Gleichermaßen kommt als nur ein weiteres Beispiel auch die Steuerung der über dem Lichtbogen abfallenden Leistung in Frage.

Weitere Ausführungsformen beider Aspekte der vorliegenden Erfindung sehen vor, dass die definierte Zeitspanne für den Betrieb des Lichtbogenschweiß- oder Lichtbogenlötgeräts im Bereich des Sprühlichtbogens im ersten Schritt mindestens 5 ms und höchstens 20 ms beträgt.

Ein Vorteil dieser Ausführungsformen kann zum einen darin zu sehen sein, dass eine Zeitspanne von mindestens 5 ms ausreichen kann, damit sich durch den Betrieb des Lichtbogenschweiß- oder des Lichtbogenlötgeräts im Bereich des Sprühlichtbogens die gewünschte kegelförmige Spitze der abschmelzenden Elektrode mit einem festen Kern ausbildet. Je nach Material, aus dem die abschmelzende Elektrode besteht, und abhängig vom Durchmesser der abschmelzenden Elektrode kann die hierzu notwendige Zeitspanne unterschiedlich sein. Eine Zeitspanne von höchstens 20 ms ist so bemessen, dass sich der Vorgang des Anspitzens der abschmelzenden Elektrode nicht zu sehr in die Länge zieht und der Nachteil störender Verzögerungen im Betrieb des Lichtbogenschweiß- oder Lichtbogenlötgeräts, zu dem die abschmelzende Elektrode gehört, minimiert wird. Außerdem wird so einem übermäßigen Verbrauch der Elektrode vorgebeugt.

Die definierte Lichtbogenstromstärke beim Betrieb des Lichtbogenschweiß- oder Lichtbogenlötgeräts im Bereich des Sprühlichtbogens im ersten Schritt kann beispielsweise im Bereich zwischen 100 A und 600 A liegen.

Weitere Ausführungsbeispiele beider Aspekte der Erfindung beinhalten, dass die Schritte des erfindungsgemäßen Verfahrens am Ende eines Schweiß- oder Lötvorgangs vorgenommen werden bzw. dass eine erfindungsgemäße Lichtbogenstromsteuereinheit konfiguriert ist, die Schritte am Ende eines Schweiß- oder Lötvorgangs vorzunehmen.

In diesem Fall kann erreicht werden, dass bevor ein weiterer Schweiß- oder Lötvorgang vorgenommen wird, die abschmelzende Elektrode die für eine spontane und sichere Kontaktzündung notwendige spitz zulaufende Form erhält und das Ende der Spitze der Elektrode weitgehend frei von elektrisch schlecht leitfähigen Rückständen ist. Werden mehrere Schweiß- oder Lötvorgänge hintereinander vorgenommen, summieren sich Zeitverzögerungen, die durch Schwierigkeiten bei der Lichtbogenzündung entstehen. Wird die abschmelzende Elektrode zwischen den Schweiß- oder Lötvorgängen in geeigneter Weise konditioniert, können diese Verzögerungen ausgeschlossen werden. Der Zeitaufwand für die Konditionierung der abschmelzenden Elektrode unterschreitet in der Regel den Zeitverlust, der durch Schwierigkeiten bei der Lichtbogenzündung anfallen würde.

Gemäß der vorliegenden Erfindung kann jedoch auch vorgesehen sein, dass die Elektrode vor dem Beginn eines ersten Schweiß- oder Lötvorgangs auf die erfindungsgemäße Weise konditioniert wird. Dies kann beispielsweise dann vorteilhaft sein, wenn die abschmelzende Elektrode ausgetauscht wird, indem zum Beispiel entsprechend der jeweiligen Schweiß- oder Lötaufgabe ein Schweiß- bzw. Lötdraht, der die abschmelzende Elektrode darstellt, gewechselt wird, und das freie Ende des Schweiß- bzw. Lötdrahtes nicht von vornherein spitz zulaufend gestaltet ist.

Ausführungsformen beider Aspekte der Erfindung sehen vor, dass die erfindungsgemäße Lichtbogenstromsteuereinheit Bestandteil eines Lichtbogenschweiß- oder Lichtbogenlötgeräts mit einer abschmelzenden Elektrode zum Schweißen oder Löten unter Schutzgas ist.

Gemäß eines Ausführungsbeispiels eines solchen Lichtbogenschweiß- oder Lichtbogenlötgeräts ist zum Absenken des Lichtbogenstroms mit gegenüber einem bloßen Abschalten der Energiezufuhr zur abschmelzenden Elektrode des Lichtbogenschweiß- oder Lichtbogenlötgeräts gesteigerter Dynamik eine hinzuschaltbare Gegenspannungsquelle vorgesehen, die konfiguriert ist, eine der Spannung zwischen abschmelzender Elektrode und einem zu bearbeitenden Werkstück entgegen gerichtete Spannung zu liefern. Dieses Ausführungsbeispiel ist unabhängig davon zu sehen, in welchem Schritt die Konfiguration der Lichtbogenstromsteuereinheit das Absenken des Lichtbogenstroms mit gesteigerter Dynamik vorsieht, da die technische Umsetzung in jedem Fall auf dieselbe Weise erfolgen kann. Bei einem erfindungsgemäßen Verfahren gemäß der beiden Aspekte der Erfindung kann das Absenken des Lichtbogenstroms mit gegenüber einem bloßen Abschalten der Energiezufuhr zur abschmelzenden Elektrode des Lichtbogenschweiß- oder Lichtbogenlötgeräts gesteigerter Dynamik entsprechend durch Hinzuschalten einer Gegenspannungsquelle, die konfiguriert ist, eine der Spannung zwischen abschmelzender Elektrode und einem zu bearbeitenden Werkstück entgegen gerichtete Spannung zu liefern, umgesetzt werden.

Diese Ausführungsbeispiele können unter anderem den Vorteil bieten, dass über die Gegenspannungsquelle das Absenken des Lichtbogenstroms aktiv unterstützt wird und somit ein besonders dynamisches Absenken ermöglicht wird.

Weitere Ausführungsbeispiele beider Aspekte der Erfindung beinhalten, dass das Lichtbogenschweiß- oder Lichtbogenlötgerät einem Schweiß- oder Lötroboter zugeordnet ist. Derartige Roboter werden meist eingesetzt, wenn eine Vielzahl von Schweißvorgängen automatisiert auszuführen ist. Funktioniert die Lichtbogenzündung hier nicht spontan mit dem Aufsetzten der abschmelzenden Elektrode auf der Oberfläche des zu bearbeiten Werkstücks, fallen in der Summe besonders große Zeitverluste an, die sich neben der durch Spritzerauswurf reduzierten Schweiß- oder Lötqualität nachteilig auswirken. Ein aufwendiges mechanisches oder gar manuelles Entfernen eines Tropfens erstarrter Schmelze am Ende der Spitze der abschmelzenden Elektrode kommt wegen der hohen Anforderungen an die effiziente Arbeitsweise eines Roboters nicht in Frage. Zudem setzen derartige Roboter die abschmelzende Elektrode in der Regel senkrecht auf die Werkstücksoberfläche auf. Eine isolierende Wirkung durch elektrisch schlecht leitfähige Ablagerungen am Ende der Spitze der abschmelzenden Elektrode kommt dadurch voll zum Tragen. Die automatische und effiziente Konditionierung der abschmelzenden Elektrode ist im Zusammenhang mit Schweiß- oder Lötrobotern daher besonders vorteilhaft. Beim Handschweißen oder beim Löten von Hand kann der Bediener die Elektrode auch schräg aufsetzen und so der Beeinträchtigung der Lichtbogenzündung entgegenwirken.

Im Zusammenhang mit weiteren Ausführungsbeispielen beider Aspekte der Erfindung kann vorgesehen sein, dass die abschmelzende Elektrode aus unlegiertem Stahl, niedriglegiertem Stahl, hochlegiertem Stahl oder Legierungen auf Nickelbasis besteht. Bei diesen Werkstoffen wurde, zum Beispiel im Vergleich zu Kupfer- und Aluminiumlegierungen, beobachtet, dass sich im Betrieb des Lichtbogenschweiß- bzw. Lichtbogenlötgeräts für eine definierte Zeitspanne und mit einer definierten Lichtbogenstromstärke im Bereich des Sprühlichtbogens besonders deutlich eine kegelförmige Spitze der abschmelzenden Elektrode mit einem festen Kern ausbildet, d.h. die Forderungen an die Eigenschaften der abschmelzenden Elektrode in besonderem Maß erfüllt sind.

Gemäß beider Aspekte der vorliegenden Erfindung kann es notwendig sein, im Rahmen der erfindungsgemäßen Schritte die Parameter des Verlauf des Lichtbogenstroms in Abhängigkeit des Materials der abschmelzenden Elektroden zu wählen. Ebenso kann die Geometrie der abschmelzenden Elektrode, beispielsweise ihr Durchmesser, eine Rolle spielen. Die Zusammensetzung des Schutzgases kann ebenfalls einen Einfluss auf die Bildung schlecht leitfähiger Rückstände haben und ist daher gegebenenfalls bei Parametrisierung zu berücksichtigen. Auch die eingesetzte Schutzgasmenge kann von Bedeutung sein, da das Schutzgas beispielsweise auch zur Kühlung der abschmelzenden Elektrode und der Schmelze beitragen kann.

Die Erfindung wird im Folgenden anhand von drei Figuren näher erläutert:

Dabei zeigen
Fig. 1 eine schematische Darstellung eines Ausführungsbeispiels eines Lichtbogenschweiß- oder Lichtbogenlötgeräts, das eine erfindungsgemäße Lichtbogenstromsteuereinheit umfasst, in Form eines Blockschaltbilds;
Fig. 2 eine schematische Darstellung eines zeitlichen Verlaufs des Lichtbogenstroms, wie er sich bei einem Ausführungsbeispiel eines erfindungsgemäßen Verfahrens bzw. aufgrund der Steuerung durch die Lichtbogenstromsteuereinheit aus Fig. 1 gemäß des ersten Aspekts der Erfindung ergeben kann, und der dabei zwischen Werkstück und abschmelzender Elektrode anliegenden Spannung zusammen mit einer Darstellung der abschmelzenden Elektrode während verschiedener Phasen des Verlaufs des Lichtbogenstroms und der Spannung;
Fig. 3 ist eine schematische Darstellung der Beschaffenheit der abschmelzenden Elektrode aus Fig. 1 und Fig. 2, wie sie sich ergibt, wenn sich nach dem Betrieb des Lichtbogenschweiß- oder Lichtbogenlötgeräts im Bereich des Sprühlichtbogens die erfindungsgemäßen weiteren Schritte nicht anschließen.

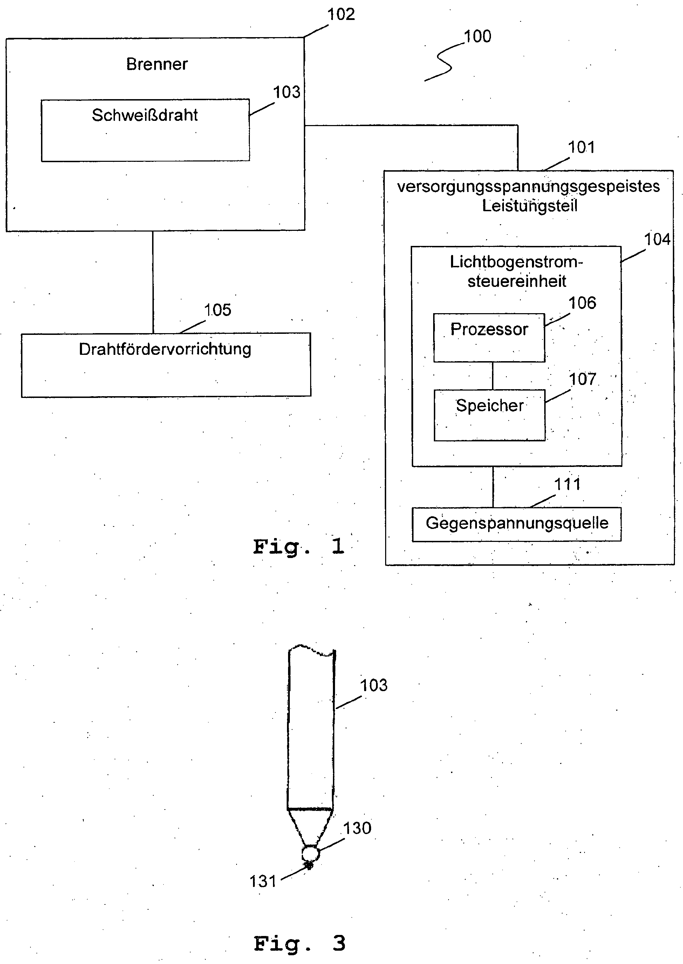

Fig. 1 zeigt eine schematische Darstellung eines Ausführungsbeispiels eines erfindungsgemäßen Lichtbogenschweiß- oder Lichtbogenlötgeräts 100.

Das Lichtbogenschweiß- oder Lichtbogenlötgerät 100 umfasst einen Brenner 102. Zum Schweißen oder Löten unter Schutzgas ist der Brenner 102 mit einer abschmelzenden Elektrode ausgestattet, die in Form eines Schweißdrahts 103 vorliegt. Für den automatischen Drahtvorschub ist eine Drahtfördervorrichtung 105 vorgesehen. Der Schweißdraht 103 ist mittels eines versorgungsspannungsgespeisten Leistungsteils 101 mit Energie beaufschlägbar. Dem versorgungsspannungsgespeisten Leistungsteil 101 ist eine Lichtbogenstromsteuereinheit 104 entsprechend des ersten Aspekts der Erfindung zugeordnet. Diese umfasst einen Prozessor 106 und einen Speicher 107. Der Prozessor 106 und der Speicher 107 stehen miteinander in Verbindung. Weiterhin ist eine hinzuschaltbare Gegenspannungsquelle 111'Bestandteil des versorgungsspannungsgespeisten Leistungsteils 101. Die Lichtbogenstromsteuereinheit 104 steht mit der Gegenspannungsquelle 111 in Verbindung.

Die abschmelzende Elektrode 103 besteht aus hochlegiertem Chrom-Nickel-Stahl. Sie hat einen Durchmesser von 1,2 mm. Als Schutzgas kommt ein Mischgas zum Einsatz, das 2,5% CO₂ enthält, während der übrige Teil des Mischgases Argon ist.

Die Lichtbogenstromsteuereinheit 104 ist konfiguriert, den Lichtbogenstrom dahingehend zu steuern, dass das Lichtbogenschweiß- oder Lichtbogenlötgerät 100 in einem ersten Schritt für eine definierte Zeitspanne und mit einer definierten Lichtbogenstromstärke im Bereich des Sprühlichtbogens betrieben wird, so dass die abschmelzende Elektrode 103 eine kegelförmige Spitze mit einem festen Kern ausbildet, in einem zweiten Schritt den Lichtbogenstrom mit einer vordefinierten Rampe unter eine kritische Stromstärke abzusenken und anschließend den Lichtbogen für eine definierte Zeitspanne aufrechtzuerhalten, in einem dritten Schritt den Lichtbogenstrom dahingehend zu steuern, dass er eine Impulsstromphase durchläuft, und den Lichtbogenstrom am Ende der Impulsstromphase soweit abzusenken, dass der Lichtbogen erlischt.

In dem in Fig. 1 gezeigten Ausführungsbeispiel ist die Lichtbogenstromsteuereinheit 104 weiterhin konfiguriert, im dritten Schritt den Lichtbogenstrom am Ende der Impulsstromphase mit gegenüber einem bloßen Abschalten der Energiezufuhr zur abschmelzenden Elektrode 103 des Lichtbogenschweiß- oder Lichtbogenlötgeräts 100 gesteigerter Dynamik abzusenken.

Zu Zweck der Steuerung des Lichtbogenstroms greift der Prozessor 106 auf ein im Speicher 107 hinterlegten Steuerprogramm zurück. Dieses umfasst Instruktionen, die bewirken, dass die Lichtbogenströmsteuereinheit 104 über den Prozessor 106 Steuersignale an das versorgungsspannungsgespeiste Leistungsteil 101 ausgibt, in Folge derer das Lichtbogenschweiß- oder Lichtbogenlötgerät 100 die drei erfindungsgemäßen Schritte durchläuft.

Mit einem entsprechenden Aufbau lässt sich eine Lichtbogenstromsteuereinheit entsprechend des zweiten Aspekts der Erfindung für das Lichtbogenschweiß- oder Lichtbogenlötgerät 100 realisieren, die konfiguriert ist, den Lichtbogenstrom dahingehend zu steuern, dass das Lichtbogenschweiß- oder Lichtbogenlötgerät 100 in einem ersten Schritt für eine definierte Zeitspanne und mit einer definierten Lichtbogenstromstärke im Bereich des Sprühlichtbogens betrieben wird, so dass die abschmelzende Elektrode 103 eine kegelförmige Spitze mit einem festen Kern ausbildet, und in einem anschließenden zweiten Schritt den Lichtbogenstrom mit gegenüber einem bloßen Abschalten der Energiezufuhr zur abschmelzenden Elektrode 103 des Lichtbogenschweiß- oder Lichtbogenlötgeräts 100 gesteigerter Dynamik soweit abzusenken, dass der Lichtbogen erlischt.

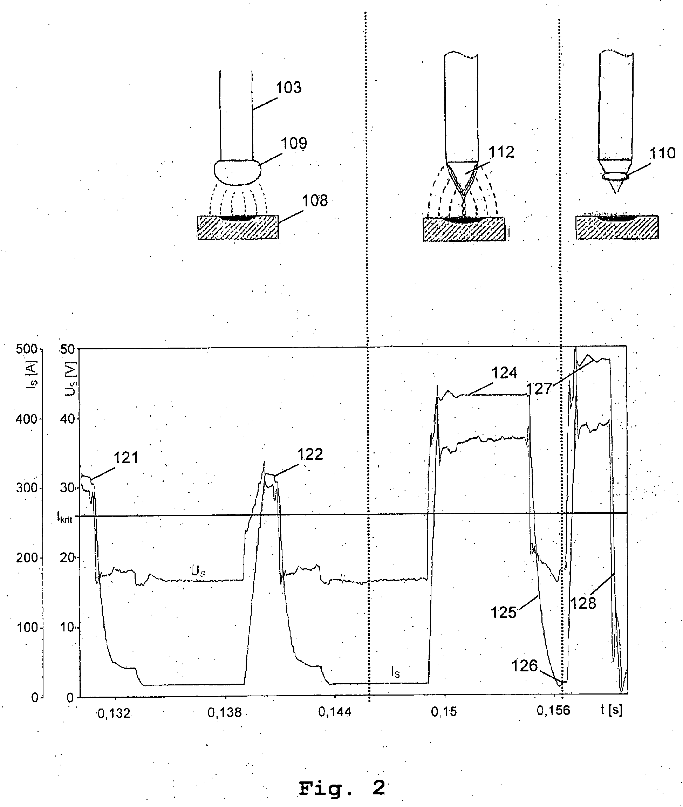

Fig. 2 zeigt eine schematische Darstellung eines zeitlichen Verlaufs des Lichtbogenstroms Iₛ, d.h. der Lichtbogenstromstärke, wie er sich bei einem. Ausführungsbeispiel eines erfindungsgemäßen Verfahrens bzw. aufgrund der Steuerung durch die Lichtbogenstromsteuereinheit 104 aus Fig. 1 gemäß des ersten Aspekts der Erfindung ergeben kann, und der dabei zwischen einem exemplarisch dargestellten zu bearbeitenden Werkstück 108 und abschmelzender Elektrode 103 anliegenden Spannung U_{S} zusammen mit einer Darstellung der abschmelzenden Elektrode 103 während verschiedener Phasen des Verlaufs des Lichtbogenstroms I_{S} und der Spannung U_{S}.

Es werden keinerlei Beschränkungen bezüglich des Verlaufs des Lichtbogenstroms I_{S} vor der Durchführung des ersten erfindungsgemäßen Schritts gemacht. In dem in Fig. 2 gezeigten Beispiel wird zunächst eine Folge von Impulsen 121 und 122 zum Schweißen eingesetzt. Weitere ähnliche oder andersartige Impulse können den Impulsen 121 und 122 vorangehen. Aufgrund des durch den Schweißdraht 103 fließenden Stroms erwärmt sich dieser und schmilzt zum Teil auf. Bedingt durch die Oberflächenspannung sammelt sich die Schmelze am unteren Ende des Schweißdrahts 103 in Form eines Tropfens oder einer Perle 109. Im oberen Teil von Fig. 2 ist zu sehen, dass der Durchmesser des Tropfens 109 den des Schweißdrahts 103 übersteigt. Werden keine besonderen Maßnahmen eingesetzt, um dies zu verhindern, erstarrt der Tropfen 109 nach Abschluss des Schweißvorgangs, in diesem Fall also nach dem Impuls 122. Während des Abschmelzens der Elektrode 103 werden Schlacken gebildet, die auf dem Tropfen. 109 liegen. Sie sind elektrisch nur schlecht leitfähig und können einer spontanen Kontaktzündung entgegenstehen, denn heim Aufsetzten der abschmelzenden Elektrode 103 auf die Oberfläche des Werkstücks 108 ist die Kontaktfläche der abschmelzenden Elektrode 103, die das Werkstück 108 berührt, von diesen isolierend wirkenden Rückständen bedeckt. Die stumpfe Form des freien Endes des Schweißdrahtes 103, die sich auch wegen des Tropfens 109 ergibt, beeinträchtigt den Zündvorgang zusätzlich.

In dem hier beschriebenen Ausführungsbeispiel der vorliegenden Erfindung schließt sich daher an den Impuls 122, der das Ende des eigentlichen Schweißvorgangs markiert, ein erster Schritt 124 an, der durch den Betrieb des Lichtbogenschweiß- oder Lichtbogenlötgeräts 100 für eine definierte Zeitspanne und mit einer definierten Lichtbogenstromstärke I_{S} im Bereich des Sprühlichtbogens, so dass die abschmelzende Elektrode 103 eine kegelförmige Spitze mit einem festen Kern 112 ausbildet, gekennzeichnet ist. Die Stromstärke des Lichtbogenstroms Iₛ liegt dabei über der kritischen Stromstärke Iₖᵣᵢₜ, die wiederum vom Material der abschmelzenden Elektrode 103 abhängig ist. Der zugehörige Teil der Kurve, die den Verlauf des Lichtbogenstroms Iₛ beschreibt, ist in Fig. 2 mit dem Bezugszeichen 124 versehen.

Der Betrieb im Bereich des Sprühlichtbogens für eine definierte Zeitspanne und mit einer definierten Lichtbogenstromstärke Iₛ führt gemäß des Ausführungsbeispiels dazu, dass das freie Ende der abschmelzenden Elektrode 103 in einem äußeren Bereich aufschmilzt, während ein innerer Kern 112 des freien Endes der abschmelzenden Elektrode 103 in einem festen Zustand verbleibt. Wie im oberen Teil von Fig. 2 dargestellt treten zudem durch den Plasmastrom im Bereich des Sprühlichtbogens Scherkräfte an der Oberfläche der abschmelzenden Elektrode 103 auf, die die Schmelze über den festen Kern 112 der abschmelzenden Elektrode 103 hin zu deren freiem Ende treiben, wo sie sich in einem feinen Strahl ablöst. Der Übergang der Schmelze der Drahtelektrode 103 hin zum Werkstück 108 erfolgt gleichmäßig und in feinen Tropfen. Für die Tropfenablösung im Sprühlichtbogen ist in erster Linie der sogenannte Pincheffekt verantwortlich, bei dem eine Einschnürung des Tropfens in Folge der Lorenzkraft auftritt.

Bedingt durch diese Eigenheiten des Werkstoffübergangs durch den erfindungsgemäßen Betrieb im Bereich des Sprühlichtbogens für eine geeignet definierte Zeitspanne und mit einer geeignet definierten Lichtbogenstromstärke Iₛ kann ein kegelförmiges, spitz zulaufendes freies Ende, also eine kegelförmige Spitze, der abschmelzenden Elektrode 103 ausgebildet werden, die einen festen, nicht erschmolzenen Kern 112 aufweist wie im oberen Teil von Fig. 2 in der mittleren Abbildung zu sehen ist.

Dem ersten Schritt 124 folgt ein zweiter Schritt 125, 126. Dieser beinhaltet das Absenken des Lichtbogenstroms Iₛ mit einer vordefinierten Rampe 125 unter die kritische Stromstärke Iₖᵣᵢₜ sowie das anschließende Aufrechterhalten des Lichtbogens für eine definierte Zeitspanne (Bezugszeichen 126).

Es sei an dieser Stelle darauf hingewiesen, dass entsprechend des zweiten Aspekts der Erfindung jedoch vorgesehen ist, den Lichtbogenstrom Iₛ hier mit gegenüber einem bloßen Abschalten der Energiezufuhr zur abschmelzenden Elektrode 103 des Lichtbogenschweiß- oder Lichtbogenlötgeräts 100 gesteigerter Dynamik soweit abzusenken, dass der Lichtbogen erlischt.

Auf diesem Weg kann erreicht werden, dass durch die trotz der nicht zu vernachlässigende Induktivität des Schweiß- bzw. Lötstromkreises erfolgte schnelle Reduktion der Lichtbogenstromstärke Iₛ bis hin zum Erlöschen des Lichtbogens der Rest der Schmelze an der abschmelzenden Elektrode mit besonders hoher Geschwindigkeit abkühlt und die Schmelze nicht ausreichend lange Zeit in einem Temperaturbereich verbleibt, in dem sie durch Oxidation elektrisch schlecht leitfähige Rückstände wie Schlacken und Zunder ausbilden kann.

Zudem bewegt sich beim Ablösen des letzten Schmelzetropfens aufgrund des Pincheffekts am Ende des Betriebs des Lichtbogenschweiß- bzw. Lichtbogenlötgeräts 100 im Bereich des Sprühlichtbogens durch die aus dem Abschnüren des Tropfens resultierende Impulsgegenkraft und die Oberflächenspannung des an der abschmelzenden Elektrode 103 verbliebenen Anteils der Schmelze dieser Anteil auf dem festen Kern 112 der kegelförmigen Spitze der Elektrode 103 weg von der Elektrodenspitze. An dieser gegenüber der des Endes der Spitze der abschmelzenden Elektrode 103 örtlich verschobenen Position kann aufgrund des dynamischen Absenkens des Lichtbogenstroms Iₛ besonders verlässlich sichergestellt werden, dass die Restschmelze auf dem festen Kern 112 der kegelförmigen Spitze der abschmelzenden Elektrode 103 erstarrt und nicht etwa zum Ende der Spitze der abschmelzenden Elektrode 103 fließt. In der Folge bleibt die spitz zulaufende Form der abschmelzenden Elektrode 103 erhalten, während die Ablagerung schlecht leitfähiger Rückstände am Ende der Spitze der abschmelzenden Elektrode 103 verhindert wird.

Entsprechend der hier vorgestellten Ausführungsform gemäß des erstens Aspekts der Erfindung wird nach dem ersten Schritt 124 im zweiten Schritt 125, 126 durch eine geeignete vorgegebene Rampe 125 die kritischen Stromstärke Iₖᵣᵢₜ unterschritten und somit der Bereich des Sprühlichtbogens verlassen. Die gewählte Rampe 125 ermöglicht, dass eine im ersten Schritt 124 ausgebildete kegelförmige Spitze der abschmelzenden Elektrode 103 mit einem festen Kern 112 erhalten bleibt, ohne das die Schmelze an der abschmelzenden Elektrode 103 vollständig erstarrt. In dem erläuterten Ausführungsbeispiel wird die Lichtbogenstromstärke I_{S} auf ca. 20 A abgesenkt. Die Dauer des zweiten Schritts beträgt ca. 1,5 ms.

Gemäß des ersten Aspekts der vorliegenden Erfindung umfasst der zweite Schritt 125, 126 nach dem Absenken des Lichtbogenstroms Iₛ mit einer vordefinierten Rampe 125 das anschließende Aufrechterhalten des Lichtbogens für eine definierte Zeitspanne. In dem in Fig. 2 gezeigten Verlauf des Lichtbogenstroms Iₛ ist der entsprechend Abschnitt mit dem Bezugszeichen 126 versehen. Die Dauer der definierten Zeitspanne des Aufrechterhaltens des Lichtbogenstroms I_{S} liegt in diesem Ausführungsbeispiel unter 1 ms.

Das Aufrechterhalten des Lichtbogens für eine definierte Zeitspanne ist mit einem Energieeintrag verbunden, durch den die nicht erstarrte Schmelze, die zuvor fadenförmig vorgelegen haben kann, in eine kompaktere Form überführt werden kann. Zudem ist es möglich, die Menge und die Temperatur der Schmelze durch entsprechende Wahl der Schweißeinstellungen in der Phase 126 des Aufrechterhaltens des Lichtbogens zu steuern.

Das Durchlaufen des zweiten Schritts 125, 126 kann bewirken, dass die zeit, die die Schmelze in einem Temperaturbereich verbringt, in dem sie für die Oxidation und damit für Schlacke- und Zunderbildung anfällig ist, minimiert wird. Etwaige geringfügige Reste der Schmelze am Ende der Spitze der abschmelzenden Elektrode 103 nach dem Durchlaufen der erfindungsgemäßen Schritte können die Leitfähigkeit des Endes der Spitze der abschmelzenden Elektrode 103 dann lediglich in reduziertem Umfang beeinträchtigen.

Gemäß des erläuterten Ausführungsbeispiels ist die vordefinierte Rampe 125 zum Absenken des Lichtbogenstroms Iₛ und die definierte Zeitspanne des Aufrechterhaltens des Lichtbogens im zweiten Schritt 125, 126 abhängig von dem Material der abschmelzenden Elektrode 103, dem Durchmesser der abschmelzenden Elektrode 103 und von der Zusammensetzung des Schutzgases definiert. Ein Vorteil dieser Ausführungsform kann sein, dass die Abhängigkeit der Temperatur der Schmelze der abschmelzenden Elektrode 103, der Menge der Schmelze und der Bildung von schlecht leitfähigen Rückständen wie Schlacke oder Zunder vom Material und Durchmesser der abschmelzenden Elektrode 103 und der Zusammensetzung des Schutzgases im zweiten Schritt berücksichtigt wird. Dann können die Temperatur der Schmelze und die Menge der Schmelze gezielt gesteuert werden und der Bildung von Schlacke und Zunder gezielt entgegengewirkt werden.

Der nachfolgende dritte Schritt 127, 128 umfasst das Durchlaufen einer Impulsstromphase 127. In der Impulsstromphase 127 kommt es aufgrund des Pincheffekts zum weitgehenden Ablösen der auf dem festen Kern 112 der abschmelzenden Elektrode 103 angelagerten Schmelze 110 in Form eines einzigen Tropfens. Die durch den zweiten Schritt erreichbare kompakte Form der Schmelze erlaubt, dass sie im dritten Schritt durch den Pincheffekt zu einem großen Teil von der abschmelzenden Elektrode 103 entfernt wird, und somit dem Ziel einer spitz zulaufenden Form der abschmelzenden Elektrode 103 dienlich sein. In der Impulsstromphase 127 liegt die Lichtbogenstromstärke Iₛ zumindest zeitweise oberhalb der kritischen Stromstärke Iₖᵣᵢₜ. Durch die aus dem Abschnüren des Tropfens resultierende Impulsgegenkraft und die Oberflächenspannung des an der abschmelzenden Elektrode 103 verbliebenen Anteils der Schmelze bewegt sich dieser Anteil auf dem festen Kern 112 der kegelförmigen Spitze der Elektrode 103 weg vom Ende der Elektrodenspitze, in Fig. 2 also nach oben.

Am Ende der Impulsstromphase 127 des dritten Schritts 127, 128 wird der Lichtbogenstrom Iₛ soweit abgesenkt, dass der Lichtbogen erlischt. In dem in Fig. 2 gezeigten Verlauf des Lichtbogenstroms Iₛ ist der entsprechend Abschnitt mit dem Bezugszeichen 128 versehen.

Durch das Absenken des Lichtbogenstroms Iₛ am Ende 128 der Impulsstromphase 127 soweit, dass der Lichtbogen erlischt kann erreicht werden, dass die Lichtbogenstromstärke Iₛ so schnell reduziert wird, dass der Rest der Schmelze 110 an dem festen Kern 112 der kegelförmigen Spitze der abschmelzenden Elektrode 103 mit einer Geschwindigkeit abkühlt, die bewirkt, dass die Restschmelze 110 an ihrer gegenüber dem Ende der Spitze der abschmelzenden Elektrode 103 örtlich verschobenen Position, an der sie auch in Fig. 2 gezeigt ist, erstarrt. Schlacke oder Zunder in oder auf der Oberfläche der gegenüber dem Ende der Spitze der abschmelzenden Elektrode 103 örtlich verschoben erstarrten Schmelze kann jedoch unkritisch für den Zündvorgang sein, denn Schlacke oder Zunder lagern sich nicht am Ende der Spitze der abschmelzenden Elektrode 103 an.

In dem erläuterten Ausführungsbeispiel erfolgt das Absenken des Lichtbogenstrom Iₛ am Ende 128 der Impulsstromphase 127 mit gegenüber einem bloßen Abschalten der Energiezufuhr zur abschmelzenden Elektrode 103 des Lichtbogenschweiß- oder Lichtbogenlötgeräts 100 gesteigerter Dynamik. Durch diese Ausgestaltung des Endes 128 der Impulsstromphase 127 kann erreicht werden, dass durch die trotz der nicht zu vernachlässigende Induktivität des Schweiß- bzw. Lötstromkreises erfolgte schnelle Reduktion der Lichtbogenstromstärke I_{S} der Rest 110 der Schmelze an der abschmelzenden Elektrode 103 mit besonders hoher Geschwindigkeit abkühlt. Dies wiederum kann bewirken, dass die Restschmelze 110 nur für kurze Zeit in einem Temperaturbereich belassen wird, in dem sie für Zunder- und Schlackebildüng anfällig ist. Des Weiteren kann auf diese Weise besonders verlässlich sichergestellt werden, dass die Restschmelze 110 an ihrer gegenüber dem Ende der Spitze der abschmelzenden Elektrode 103 örtlich verschobenen Position auf dem festen Kern 112 der kegelförmigen Spitze der abschmelzenden Elektrode 103 erstarrt und nicht etwa zum Ende der Elektrodenspitze fließen kann.

Zum Absenken des Lichtbogenstroms Iₛ mit gegenüber einem bloßen Abschalten der Energiezufuhr zur abschmelzenden Elektrode 103 des Lichtbogenschweiß- oder Lichtbogenlötgeräts 100 gesteigerter Dynamik soweit, dass der Lichtbogen erlischt, sieht das erläuterte Ausführungsbeispiel die hinzuschaltbare Gegenspannungsquelle 111 vor. Sie ist konfiguriert, eine der Spannung U_{S} zwischen abschmelzender Elektrode 103 und dem zu bearbeitenden Werkstück 108 entgegen gerichtete Spannung zu liefern. Die Gegenspannungsquelle 111 kann das Absenken des Lichtbogenstroms Iₛ aktiv unterstützen und somit ein besonders dynamisches Absenken ermöglichen. Das Hinzuschalten der Gegenspannungsquelle 111 erfolgt durch ein entsprechendes Signal der Lichtbogenstromsteuereinheit 104 an die hinzuschaltbare Gegenspannungsquelle 111. Weiterhin kann die Lichtbogenstromsteuereinheit 104 über die Verbindung zur hinzuschaltbaren Gegenspannungsquelle 111 den Verlauf der von der Gegenspannungsquelle 111 abgegebenen Spannung steuern bzw. regeln. Entsprechend des zweiten Aspekts der Erfindung kann im zweiten Schritt die hinzuschaltbare Gegenspannungsquelle 111 zum Absenken des Lichtbogenstroms I_{S} mit gegenüber einem bloßen Abschalten der Energiezufuhr zur abschmelzenden Elektrode 103 des Lichtbogenschweiß- oder Lichtbogenlötgeräts 100 gesteigerter Dynamik soweit, dass der Lichtbogen erlischt, dienen.

Nach dem dritten Schritt 127, 128 zeichnet sich die Spitze der abschmelzenden Elektrode 103 dadurch aus, dass sie kegelförmig ist und gleichzeitig im erkalteten Zustand ihr Ende weitgehend frei von elektrisch schlecht leitfähigen Rückständen wie Schlacke und Zunder ist. Auf diese Weise kann erreicht werden, dass die abschmelzende Elektrode 103 für eine spontane und sichere Kontaktzündung beim Berühren der Oberfläche des zu bearbeitenden Werkstücks 108 besonders geeignet ist.

In dem in Fig. 2 gezeigten beispielhaften Verlauf des Lichtbogenstroms Iₛ nimmt der Lichtbogenstrom Iₛ im Verlauf der Impulsstromphase 127 eine Amplitude (ca. 480 A) an, die die Amplitude des Lichtbogenstroms Iₛ während des ersten Schritts 124 (ca. 440 A) übersteigt.

Die Impulsstromphase 127 des dritten Schritts 127, 128 wird in einer Zeit zwischen 1 ms und 3 ms durchlaufen. Sie liegt im Ausführungsbeispiel bei ca. 2,5 ms. Auf diese Weise kann einerseits erreicht werden, dass sich aufgrund des Pincheffekts nur ein Tropfen aus Schmelze von der abschmelzenden Elektrode 103 löst. Das Ablösen mehrerer Tropfen kann gegebenenfalls nutzlos im Hinblick auf das Ziel sein, dass die Elektrode 103 eine spitz zulaufende Form erhalten und weitgehend frei von elektrisch schlecht leitfähigen Rückständen sein soll. Eine übermäßig lange Dauer der Impulsstromphase 127, die vom Ablösen mehrerer Tropfen begleitet ist, kann zu einer unnötigen Verlängerung der Prozessdauer führen und daher ineffizient sein. Eine maximale Dauer der Impulsstromphase 127 von 3 ms kann dies verhindern. Andererseits kann es vorteilhaft sein, eine Mindestdauer von 1 ms nicht zu unterschreiten, um sicherzustellen, dass ein ausreichender Energieeintrag stattfindet, so dass sich die Schmelze überhaupt von der abschmelzenden Elektrode 103 ablöst.

Die definierte Zeitspanne für den Betrieb des Lichtbogenschweiß- oder Lichtbogenlötgeräts 100 im Bereich des Sprühlichtbogens im ersten Schritt 124 beträgt in dem in Fig. 2 gezeigten Beispiel mindestens 5 ms und höchstens 20 ms. Wie aus Fig. 2 ersichtlich, liegt die definierte Zeitspanne hier bei ca. 5 ms. Ein Vorteil kann dabei zum einen darin zu sehen sein, dass eine Zeit von mindestens 5 ms ausreichen kann, damit sich durch den Betrieb des Lichtbogenschweiß- oder der Lichtbogenlötgeräts 100 im Bereich des Sprühlichtbogens 124 die gewünschte kegelförmige Spitze der abschmelzenden Elektrode 103 mit einem festen Kern 112 ausbildet. Je nach Material, aus dem die abschmelzende Elektrode 103 besteht, kann die hierzu notwendige Zeitspanne unterschiedlich sein. Eine definierte Zeitspanne von höchstens 20 ms ist so knapp bemessen, dass sich der Vorgang des Anspitzens der abschmelzenden Elektrode 103 nicht zu sehr in die Länge zieht und der Nachteil störender Verzögerungen im Betrieb des Lichtbogenschweiß- oder Lichtbogenlötgeräts 100 minimiert wird. Außerdem wird so einem übermäßigen Verbrauch der Elektrode 103 vorgebeugt.

In dem Beispiel aus Fig. 2 liegt also die Zeit, in der die Impulsstromphase 127 durchlaufen wird, unter der Dauer definierten Zeitspanne des Betriebs im Bereich des Sprühlichtbogens 124.

Fig. 3 zeigt eine schematische Darstellung der Beschaffenheit der abschmelzenden Elektrode 103 aus Fig. 1 und Fig. 2, wie sie sich ergibt, wenn nach dem Betrieb des Lichtbogenschweiß- oder Lichtbogenlötgeräts im Bereich des Sprühlichtbogens sich die erfindungsgemäßen weiteren Schritte nicht anschließen.

Nach Beendigung des Betriebs eines Lichtbogenschweiß- oder Lichtbogenlötgeräts zum Schweißen oder Löten unter Schutzgas im Bereich des Sprühlichtbogens sammelt sich eine vergleichsweise geringe Menge an Schmelze in Form eines Tropfens 130 an der Spitze der abschmelzenden Elektrode 103. Durch oxidierende Komponenten, die im Schutzgas enthalten sind, oder oxidierende Stoffe, die aus dem jeweils bearbeiteten Werkstück bzw. aus der abschmelzenden Elektrode 103 ausgelöst werden oder die durch ein Vermischen des Schutzgases mit der Umgebungsatmösphäre in Kontakt mit der abschmelzenden Elektrode 103 kommen, werden Schlacken 131 gebildet, die auf dem Tropfen 130 liegen.

Beim Erkalten des Tropfens 130 werden die Schlacken 131 vor der Erstarrungsfront hergeschoben. In der Folge verbleiben sie letztlich an der Position, an der die Erstarrung zuletzt stattgefunden hat. Da bei vergleichsweise geringer Menge der Schmelze bei Beendigung eines Schweiß- oder Lötvorgangs die Erstarrung konzentrisch vom festen Kern der abschmelzenden Elektrode 103 beginnend erfolgt, sammeln sich die Schlacken 131 am Ende der Spitze der abschmelzenden Elektrode 103 wie in Fig. 3 dargestellt.

Eine erfindungsgemäße Lichtbogenstromsteuereinheit und ein erfindungsgemäßes Verfahren bringen eine Reihe vorteilhafter Effekte mit sich. So erlauben sie, eine spitz zulaufende Form der verwendeten abschmelzenden Elektrode zu erreichen, ohne dass sich elektrisch schlecht leitfähige Ablagerungen am Ende der Spitze der abschmelzenden Elektrode sammeln. Auf diese Weise wird eine spontane und verlässliche Kontaktzündung ermöglicht, sobald die abschmelzende Elektrode die Oberfläche eines zu bearbeitenden Werkstücks berührt. Hierdurch kann besonders effektiv und wirtschaftlich geschweißt bzw. gelötet werden. Besonders deutlich macht sich dieser Vorteil bei der Anwendung der Erfindung im Zusammenhang mit Schweiß- oder Lötrobotern bemerkbar. Da die vorliegende Erfindung darüber hinaus aufgrund des verbesserten Verhaltens bei der Kontaktzündung zur Vermeidung von Spritzerauswurf beiträgt, können Verunreinigungen des Schweiß- oder Lötbades und damit einhergehende Beeinträchtigung der Qualität des Arbeitsergebnisses reduziert werden. Ein weiterer Vorteil ist darin zu sehen, dass die Konditionierung der abschmelzenden Elektrode ohne ihre mechanische Bearbeitung erreicht werden kann.

## Patentansprüche

1. Lichtbogenstromsteuereinheit (104) für ein Lichtbogenschweiß- oder Lichtbogenlötgerät (100) mit einer abschmelzenden Elektrode (103) zum Schweißen oder Löten unter Schutzgas, **dadurch gekennzeichnet, dass** die Lichtbogenstromsteuereinheit (104) konfiguriert ist,
- den Lichtbogenstrom (IS) dahingehend zu steuern, dass das Lichtbogenschweiß- oder Lichtbogenlötgerät (100) in einem ersten Schritt (124) für eine definierte Zeitspanne und mit einer definierten Lichtbogenstromstärke (IS) im Bereich des Sprühlichtbogens betrieben wird, so dass die abschmelzende Elektrode (103) eine kegelförmige Spitze mit einem festen Kern (112) ausbildet,
- in einem zweiten Schritt (125, 126) den Lichtbogenstrom (IS) mit einer vordefinierten Rampe (125) unter eine kritische Stromstärke (Ikrit) abzusenken, so dass der Bereich des Sprühlichtbogens verlassen wird, und anschließend den Lichtbogen für eine definierte Zeitspanne aufrechtzuerhalten (126),
- in einem dritten Schritt (127,128) den Lichtbogenstrom (IS) dahingehend zu steuern, dass er eine Impulsstromphase (127) durchläuft, und den Lichtbogenstrom (IS) am Ende der Impulsstromphase (127) soweit abzusenken, dass der Lichtbogen erlischt (128).

2. Lichtbogenstromsteuereinheit (104) nach Anspruch 1, **dadurch gekennzeichnet, dass** die Lichtbogenstromsteuereinheit (104) konfiguriert ist, im dritten Schritt den Lichtbogenstrom (IS) am Ende der Impulsstromphase (127) mit gegenüber einem bloßen Abschalten der Energiezufuhr zur abschmelzenden Elektrode (103) des Lichtbogenschweiß- oder Lichtbogenlötgeräts (100) gesteigerter Dynamik soweit abzusenken, dass der Lichtbogen erlischt (128).

3. Lichtbogenstromsteuereinheit (104) nach einem der vorhergehenden Ansprüche, **dadurch gekennzeichnet, dass** sie konfiguriert ist, den Lichtbogenstrom (IS) dahingehend zu steuern, die Impulsstromphase (127) des dritten Schritts (127, 128) in einer Zeit zwischen 1 ms und 3 ms zu durchlaufen.

4. Lichtbogenstromsteuereinheit (104) nach einem der vorhergehenden Ansprüche, **dadurch gekennzeichnet, dass** die vordefinierte Rampe (125) zum Absenken des Lichtbogenstroms (IS) und die definierte Zeitspanne des Aufrechterhaltens (126) des Lichtbogens im zweiten Schritt (125, 126) abhängig von dem Material der abschmelzenden Elektrode (103), dem Durchmesser der abschmelzenden Elektrode (103) und von der Zusammensetzung des Schutzgases definiert sind.

5. Lichtbogenstromsteuereinheit (104) nach einem der vorhergehenden Ansprüche, **dadurch gekennzeichnet, dass** sie konfiguriert ist, im zweiten Schritt (125, 126) den Lichtbogenstrom (IS) auf ein Wert im Bereich von 3 A bis 50 A abzusenken, wobei die Dauer des zweiten Schritts (125,126) zwischen 0,5 ms und 5 ms beträgt.

6. Lichtbogenstromsteuereinheit (104) für ein Lichtbogenschweiß- oder Lichtbogenlötgerät (100) mit einer abschmelzenden Elektrode (103) zum Schweißen oder Löten unter Schutzgas, **dadurch gekennzeichnet, dass** die Lichtbogenstromsteuereinheit (104) konfiguriert ist,
- den Lichtbogenstrom (IS) dahingehend zu steuern, dass das Lichtbogenschweiß- oder Lichtbogenlötgerät (100) in einem ersten Schritt (124) für eine definierte Zeitspanne und mit einer definierten Lichtbogenstromstärke (IS) im Bereich des Sprühlichtbogens betrieben wird, so dass die abschmelzende Elektrode (103) eine kegelförmige Spitze mit einem festen Kern (112) ausbildet, und
- in einem anschließenden zweiten Schritt den Lichtbogenstrom mit gegenüber einem bloßen Abschalten der Energiezufuhr zur abschmelzenden Elektrode (103) des Lichtbogenschweiß- oder Lichtbogenlötgeräts (100) gesteigerter Dynamik soweit abzusenken, dass der Lichtbogen erlischt.

7. Lichtbogenstromsteuereinheit (104) nach einem der vorhergehenden Ansprüche, **dadurch gekennzeichnet, dass** die definierte Zeitspanne für den Betrieb des Lichtbogenschweiß- oder Lichtbogenlötgeräts (100) im Bereich des Sprühlichtbogens im ersten Schritt (124) mindestens 5 ms und höchstens 20 ms beträgt.

8. Lichtbogenstromsteuereinheit (104) nach einem der vorhergehenden Ansprüche, **dadurch gekennzeichnet, dass** die Lichtbogenstromsteuereinheit (104) konfiguriert ist, die Schritte (124, 125, 126,127, 128) am Ende eines Schweiß- oder Lötvorgangs vorzunehmen.

9. Lichtbogenschweiß- oder Lichtbogenlötgerät (100) mit einer abschmelzenden Elektrode (103) zum Schweißen oder Löten unter Schutzgas mit einer Lichtbogenstromsteuereinheit (104) nach einem der vorhergehenden Ansprüche.

10. Lichtbogenschweiß- oder Lichtbogenlötgerät (100) nach Anspruch 9, **dadurch gekennzeichnet, dass** zum Absenken des Lichtbogenstroms (IS) mit gegenüber einem bloßen Abschalten der Energiezufuhr zur abschmelzenden Elektrode (103) des Lichtbogenschweiß- oder Lichtbogenlötgeräts (100) gesteigerter Dynamik eine hinzuschaltbare Gegenspannungsquelle (111) vorgesehen ist, die konfiguriert ist, eine der Spannung (US) zwischen abschmelzender Elektrode (103) und einem zu bearbeitenden Werkstück (108) entgegen gerichtete Spannung zu liefern.

11. Lichtbogenschweiß- oder Lichtbogenlötgerät (100) nach einem der Ansprüche 9 oder 10, **dadurch gekennzeichnet, dass** es einem Schweiß- oder Lötroboter zugeordnet ist.

12. Lichtbogenschweiß- oder Lichtbogenlötgerät (100) nach einem der Ansprüche 9-11, **dadurch gekennzeichnet, dass** die abschmelzende Elektrode (103) aus unlegiertem Stahl, niedriglegiertem Stahl, hochlegiertem Stahl oder Legierungen auf Nickelbasis besteht.

13. Verfahren zur Konditionierung einer abschmelzenden Elektrode (103) eines Lichtbogenschweiß- oder Lichtbogenlötgeräts (100) zum Schweißen oder Löten unter Schutzgas, **gekennzeichnet durch**:
- Betrieb des Lichtbogenschweiß- oder Lichtbogenlötgeräts (100) im Bereich des Sprühlichtbogens für eine definierte Zeitspanne und mit einer definierten Lichtbogenstromstärke (IS), so dass die abschmelzende Elektrode (103) eine kegelförmige Spitze mit einem festen Kern (112) ausbildet, in einem ersten Schritt (124),
- Absenken des Lichtbogenstroms mit einer vordefinierten Rampe (125) unter eine kritische Stromstärke (Ikrit), so dass der Bereich des Sprühlichtbogens verlassen wird, und anschließendes Aufrechterhalten (126) des Lichtbogens für eine definierte Zeitspanne in einem zweiten Schritt (125, 126),
- Durchlaufen einer Impulsstromphase (127) an deren Ende der Lichtbogenstrom (IS) soweit abgesenkt wird, dass der Lichtbogen erlischt (128), in einem dritten Schritt (127, 128).

14. Verfahren nach Anspruch 13, **dadurch gekennzeichnet, dass** am Ende der Impulsstromphase (127) der Lichtbogenstrom (IS) mit gegenüber einem bloßen Abschalten der Energiezufuhr zur abschmelzenden Elektrode (103) des Lichtbogenschweiß- oder Lichtbogenlötgeräts (100) gesteigerter Dynamik soweit abgesenkt wird, dass der Lichtbogen erlischt (128).

15. Verfahren zur Konditionierung einer abschmelzenden Elektrode (103) eines Lichtbogenschweiß- oder Lichtbogenlötgeräts (100) zum Schweißen oder Löten unter Schutzgas, **gekennzeichnet durch**:
- Betrieb des Lichtbogenschweiß- oder Lichtbogenlötgeräts (100) im Bereich des Sprühlichtbogens für eine definierte Zeitspanne und mit einer definierten Lichtbogenstromstärke IS, so dass die abschmelzende Elektrode (103) eine kegelförmige Spitze mit einem festen Kern (112) ausbildet, in einem ersten Schritt (124),
- Absenken des Lichtbogenstroms (IS) mit gegenüber einem bloßen Abschalten der Energiezufuhr zur abschmelzenden Elektrode (103) des Lichtbogenschweiß- oder Lichtbogenlötgeräts (100) gesteigerter Dynamik soweit, dass der Lichtbogen erlischt, in einem anschließenden zweiten Schritt.

16. Verfahren nach einem der Ansprüche 13-15, **dadurch gekennzeichnet, dass** die definierte Zeitspanne für den Betrieb des Lichtbogenschweiß- oder Lichtbogenlötgeräts (100) im Bereich des Sprühlichtbogens im ersten Schritt (124) mindestens 5 ms und höchstens 20 ms beträgt.

17. Verfahren nach einem der Ansprüche 13-16, **dadurch gekennzeichnet, dass** es am Ende eines Schweißvorgangs ausgeführt wird.

## Claims

1. Arc current controller (104) for an arc welding or arc soldering device (100) having a consumable electrode (103) for welding or soldering under a shielding gas, **characterised in that** the arc current controller (104) is configured,
- to control the arc current (IS) to the effect that the arc welding or arc soldering device (100) in a first step (124) is operated for a defined period of time and with a defined arc current strength (IS) in the regime of the spray arc, so that the consumable electrode (103) forms a cone-shaped tip with a solid core (112),
- in a second step (125, 126), to lower the arc current (IS) with a predefined ramp (125) under a critical current strength (Ikrit), so that the regime of the spray arc is left and subsequently to maintain the arc for a defined period of time (126),
- in a third step (127, 128), to control the arc current (IS) to the effect that it passes through a pulsed current phase (127) and to lower the arc current (IS) at the end of the pulsed current phase (127) to the extent that the arc is extinguished (128).

2. Arc current controller (104) according to Claim 1, **characterised in that** the arc current controller (104) is configured in the third step to lower the arc current (IS) at the end of the pulsed current phase (127) in an increased dynamic manner compared to simply switching off the energy supply to the consumable electrode (103) of the arc welding or arc soldering device (100) to the extent that the arc is extinguished (128).

3. Arc current controller (104) according to any one of the preceding claims, **characterised in that** it is configured to control the arc current (IS) to the effect that it passes through the pulsed current phase (127) of the third step (127, 128) in a time between 1 ms and 3 ms.

4. Arc current controller (104) according to any one of the preceding claims, **characterised in that** the predefined ramp (125) for lowering the arc current (IS) and the defined period of time for maintaining (126) the arc in the second step (125, 126) are defined dependent on the material of the consumable electrode (103), on the diameter of the consumable electrode (103) and on the composition of the shielding gas.

5. Arc current controller (104) according to any one of the preceding claims, **characterised in that** it is configured in the second step (125, 126) to lower the arc current (IS) to a value in the range from 3 A to 50 A, wherein the duration of the second step (125, 126) is between 0.5 ms and 5 ms.

6. Arc current controller (104) for an arc welding or arc soldering device (100) having a consumable electrode (103) for welding or soldering under a shielding gas, **characterised in that** the arc current controller (104) is configured,
- to control the arc current (IS) to the effect that the arc welding or arc soldering device (100) in a first step (124) is operated for a defined period of time and with a defined arc current strength (IS) in the regime of the spray arc, so that the consumable electrode (103) forms a cone-shaped tip with a solid core (112), and
- in a subsequent second step to lower the arc current in an increased dynamic manner compared to simply switching off the energy supply to the consumable electrode (103) of the arc welding or arc soldering device (100) to the extent that the arc is extinguished.

7. Arc current controller (104) according to any one of the preceding claims, **characterised in that** the defined period of time for operating the arc welding or arc soldering device (100) in the regime of the spray arc in the first step (124) is at least 5 ms and at most 20 ms.

8. Arc current controller (104) according to any one of the preceding claims, **characterised in that** in the arc current controller (104) is configured to carry out the steps (124, 125, 126, 127, 128) at the end of a welding or soldering process.

9. Arc welding or arc soldering device (100) having a consumable electrode (103) for welding or soldering under a shielding gas having an arc current controller (104) according to any one of the preceding claims.

10. Arc welding or arc soldering device (100) according to Claim 9, **characterised in that** an additionally connectable countervoltage source (111) is provided to lower the arc current (IS) in an increased dynamic manner compared to simply switching off the energy supply to the consumable electrode (103) of the arc welding or arc soldering device (100) and is configured to supply a voltage which is reverse to the voltage (US) between the consumable electrode (103) and a workpiece (108) to be processed.

11. Arc welding or arc soldering device (100) according to either of Claims 9 and 10, **characterised in that** it is assigned to a welding or soldering robot.

12. Arc welding or arc soldering device (100) according to any one of Claims 9 to 11, **characterised in that** the consumable electrode (103) consists of unalloyed steel, low-alloy steel, high-alloy steel or alloys based on nickel.

13. Method for conditioning a consumable electrode (103) of an arc welding or arc soldering device (100) for welding or soldering under a shielding gas, **characterised by**:
- operating the arc welding or arc soldering device (100) in the regime of the spray arc for a defined period of time and with a defined arc current strength (IS), so that the consumable electrode (103) forms a cone-shaped tip with a solid core (112), in a first step (124),
- lowering the arc current with a predefined ramp (125) under a critical current strength (Ikrit), so that the regime of the spray arc is left and subsequently maintaining (126) the arc for a defined period of time in a second step (125, 126),
- passing through a pulsed current phase (127), at the end of which the arc current (IS) is lowered to the extent that the arc is extinguished (128), in a third step (127, 128).

14. Method according to Claim 13, **characterised in that** at the end of the pulsed current phase (127) the arc current (IS) is lowered in an increased dynamic manner compared to simply switching off the energy supply to the consumable electrode (103) of the arc welding or arc soldering device (100) to the extent that the arc is extinguished (128).

15. Method for conditioning a consumable electrode (103) of an arc welding or arc soldering device (100) for welding or soldering under a shielding gas, **characterised by**:
- operating the arc welding or arc soldering device (100) in the regime of the spray arc for a defined period of time and with a defined arc current strength (IS), so that the consumable electrode (103) forms a cone-shaped tip with a solid core (112), in a first step (124),
- lowering the arc current (IS) in an increased dynamic manner compared to simply switching off the energy supply to the consumable electrode (103) of the arc welding or arc soldering device (100) to the extent that the arc is extinguished, in a subsequent second step.

16. Method according to any one of Claims 13 to 15, **characterised in that** the defined period of time for operating the arc welding or arc soldering device (100) in the regime of the spray arc in the first step (124) is at least 5 ms and at most 20 ms.

17. Method according to any one of Claims 13 to 16, **characterised in that** it is carried out at the end of a welding process.

## Revendications

1. Unité de commande de courant d'arc (104) pour un appareil de soudage à l'arc ou appareil de brasage à l'arc (100) avec une électrode fusible (103) pour le soudage ou brasage sous protection gazeuse, **caractérisée en ce que** l'unité de commande de courant d'arc (104) est configurée de sorte à
- commander le courant d'arc (IS) afin que l'appareil de soudage à l'arc ou l'appareil de brasage à l'arc (100) soit exploité, au cours d'une première étape (124), pendant un laps de temps défini et avec une intensité de courant d'arc définie (IS), dans un domaine du spray arc, de sorte à ce que l'électrode fusible (103) forme une pointe conique avec un noyau solide (112),
- faire baisser, au cours d'une deuxième étape (125, 126), le courant d'arc (IS) avec une rampe prédéfinie (125) sous une intensité de courant critique (Ikrit) afin qu'il quitte le domaine du spray arc et ensuite maintenir le courant d'arc pendant un laps de temps défini (126),
- commander, au cours d'une troisième étape (127, 128), le courant d'arc (IS) afin qu'il passe par une phase de courant pulsé (127) et faire baisser le courant d'arc (IS) à la fin de la phase de courant pulsé (127) de sorte à éteindre l'arc électrique (128).

2. Unité de commande de courant d'arc (104) selon la revendication 1, **caractérisée en ce que** l'unité de commande de courant d'arc (104) est configurée de sorte à baisser, au cours de la troisième étape, le courant d'arc (IS) à la fin de la phase de courant pulsé (127) avec une dynamique augmentée par rapport à une simple coupure de l'alimentation électrique vers l'électrode fusible (103) de l'appareil de soudage à l'arc ou appareil de brasage à l'arc (100) afin d'éteindre l'arc électrique (128).

3. Unité de commande de courant d'arc (104) selon une des revendications précédentes, **caractérisée en ce que** celle-ci est configurée de sorte à commander le courant d'arc (IS) afin qu'il passe par la phase de courant pulsé (127) de la troisième étape (127, 128) en un laps de temps entre 1 ms et 3 ms.

4. Unité de commande de courant d'arc (104) selon une des revendications précédentes, **caractérisée en ce que** la rampe prédéfinie (125) destinée à faire baisser le courant d'arc (IS) et le laps de temps défini destiné au maintien (126) du courant d'arc, au cours de la deuxième étape (125, 126), sont définis en fonction du matériau de l'électrode fusible (103), du diamètre de l'électrode fusible (103) et de la composition de la protection gazeuse.

5. Unité de commande de courant d'arc (104) selon une des revendications précédentes, **caractérisée en ce que** celle-ci est configurée de sorte à faire baisser, au cours de la deuxième étape (125, 126), le courant d'arc (IS) à hauteur d'une valeur se situant dans une plage de 3 A à 50 A, auquel cas la durée de la deuxième étape (125, 126) se situe entre 0,5 ms et 5 ms.

6. Unité de commande de courant d'arc (104) pour un appareil de soudage à l'arc ou appareil de brasage à l'arc (100) avec une électrode fusible (103) pour le soudage ou brasage sous protection gazeuse, **caractérisée en ce que** l'unité de commande de courant d'arc (104) est configurée de sorte à
- commander le courant d'arc (IS) afin que l'appareil de soudage à l'arc ou appareil de brasage à l'arc (100), au cours d'une première étape (124), soit exploité pendant un laps de temps défini et avec une intensité de courant d'arc définie (IS) dans le domaine du spray arc, de sorte à ce que l'électrode fusible (103) forme une pointe conique avec un noyau solide (112), et
- faire baisser, au cours d'une deuxième étape consécutive, le courant d'arc avec une dynamique augmentée par rapport à une simple coupure de l'alimentation électrique vers l'électrode fusible (103) de l'appareil de soudage à l'arc ou appareil de brasage à l'arc (100) afin d'éteindre l'arc électrique.

7. Unité de commande de courant d'arc (104) selon une des revendications précédentes, **caractérisée en ce que** la durée définie pour le fonctionnement de l'appareil de soudage à l'arc ou appareil de brasage à l'arc (100) dans le domaine du spray arc est, au cours de la première étape (124), au minimum de 5 ms et au maximum de 20 ms.

8. Unité de commande de courant d'arc (104) selon une des revendications précédentes, **caractérisée en ce que** l'unité de commande de courant d'arc (104) est configurée de sorte à effectuer les étapes (124, 125, 126, 127, 128) à la fin d'un procédé de soudage ou de brasage.

9. Appareil de soudage à l'arc ou appareil de brasage à l'arc (100) avec une électrode fusible (103) pour le soudage ou brasage sous protection gazeuse avec une unité de commande de courant d'arc (104) selon une des revendications précédentes.

10. Appareil de soudage à l'arc ou appareil de brasage à l'arc (100) selon la revendication 9, **caractérisé en ce que** pour faire baisser le courant d'arc (IS) avec une dynamique augmentée par rapport à une seule coupure de l'alimentation électrique vers l'électrode fusible (103) de l'appareil de soudage à l'arc ou appareil de brasage à l'arc (100) l'on prévoit une source de tension antagoniste (111) pouvant y être connectée, laquelle est configurée de sorte à livrer une tension dirigée vers la tension (US) entre l'électrode fusible (103) et une pièce d'oeuvre à usiner (108).

11. Appareil de soudage à l'arc ou appareil de brasage à l'arc (100) selon une des revendications 9 ou 10, **caractérisé en ce qu'**il est affecté à un robot de soudage ou de brasage.

12. Appareil de soudage à l'arc ou appareil de brasage à l'arc (100) selon une des revendications de 9 à 11, **caractérisé en ce que** l'électrode fusible (103) se compose d'acier non allié, d'acier faiblement allié, d'acier fortement allié ou d'alliages à base de nickel.

13. Procédé pour le conditionnement d'une électrode fusible (103) d'un appareil de soudage à l'arc ou appareil de brasage à l'arc (100) pour le soudage ou brasage sous protection gazeuse, **caractérisé en ce que** :
- le fonctionnement de l'appareil de soudage à l'arc ou appareil de brasage à l'arc (100) dans le domaine du spray arc a lieu pendant un laps de temps défini et avec une intensité de courant d'arc définie (IS) afin que l'électrode fusible (103) forme une pointe conique avec un noyau solide (112), au cours d'une première étape (124),
- la baisse du courant d'arc a lieu avec une rampe prédéfinie (125) sous une intensité de courant critique (Ikrit) afin de quitter le domaine du spray d'arc et, par la suite, maintien (126) de l'arc électrique pendant un laps de temps défini, au cours d'une deuxième étape (125, 126),
- le passage par une phase de courant pulsé (127) à la fin de laquelle le courant d'arc (IS) est baissé a lieu afin d'éteindre l'arc électrique (128), au cours d'une troisième étape (127, 128).

14. Procédé selon la revendication 13, **caractérisé en ce qu'**à la fin de la phase de courant pulsé (127) le courant d'arc (IS) est baissé avec une dynamique augmentée par rapport à une simple coupure de l'alimentation électrique vers l'électrode fusible (103) de l'appareil de soudage à l'arc ou appareil de brasage à l'arc (100) de sorte à éteindre l'arc électrique (128).

15. Procédé de conditionnement d'une électrode fusible (103) d'un appareil de soudage à l'arc ou appareil de brasage à l'arc (100) pour le soudage ou brasage sous une protection gazeuse, **caractérisé en ce que**:
- le fonctionnement de l'appareil de soudage à l'arc ou appareil de brasage à l'arc (100) dans le domaine du spray arc a lieu pendant un laps de temps défini et avec une intensité de courant d'arc définie IS afin que l'électrode fusible (103) forme une pointe conique avec un noyau solide (112), au cours d'une première étape (124),
- la baisse de courant d'arc (IS) avec une dynamique augmentée par rapport à une simple coupure de l'alimentation électrique vers l'électrode fusible (103) de l'appareil de soudage à l'arc ou appareil de brasage à l'arc (100) a lieu afin d'éteindre l'arc électrique, au cours d'une deuxième étape consécutive.

16. Procédé selon une des revendications de 13 à 15, **caractérisé en ce que** le laps de temps défini pour le fonctionnement de l'appareil de soudage à l'arc ou appareil de brasage à l'arc (100) dans le domaine du spray arc, au cours de la première étape (124), est au minimum de 5 ms et au maximum de 20 ms.

17. Procédé selon une des revendications de 13 à 16, **caractérisé en ce qu'**il est effectué à la fin d'un procédé de soudage.
